# EUROPÄISCHE PATENTSCHRIFT

(11) **EP 2 661 391 B1**
(45) Veröffentlichungstag und Bekanntmachung des Hinweises auf die Patenterteilung: **02.09.2015**
(21) Anmeldenummer: 11826158.5
(22) Anmeldetag: 25.11.2011
(51) Int. Cl.: B62K 5/05

(54) **KICKBOARD**
SCOOTER
TROTTINETTE

(30) Priorität: 29.11.2010 AT 19872010; 03.12.2010 AT 20162010; 15.12.2010 AT 20782010; 17.01.2011 AT 642011; 22.04.2011 AT 5752011; 06.09.2011 AT 12712011; 15.09.2011 AT 13342011; 01.04.2011 WO PCT/AT2011/000160; 08.04.2011 WO PCT/AT2011/000169; 19.09.2011 WO PCT/AT2011/000381
(43) Veröffentlichungstag der Anmeldung: 13.11.2013
(73) Patentinhaber: Petutschnig, Hubert, 2345 Brunn am Gebirge (AT)
(72) Erfinder: Petutschnig, Hubert, 2345 Brunn am Gebirge (AT)
(74) Vertreter: Wildhack & Jellinek
(86) Internationale Anmeldenummer: PCT/AT2011/000478
(87) Internationale Veröffentlichungsnummer: WO 2012/071595

(56) Entgegenhaltungen:
- DE-A1- 2 413 675
- DE-A1- 10 053 501
- DE-A1- 10 107 291
- DE-A1-102005 062 057
- DE-U1- 20 008 604
- DE-U1- 20 017 174
- DE-U1- 20 101 942
- DE-U1- 20 107 090
- GB-A- 616 723
- KR-A- 20110 004 829
- US-A- 2 474 946
- US-A1- 2002 135 147
- US-A1- 2009 256 325

## Beschreibung

Die Erfindung betrifft einen Roller gemäß dem Oberbegriff des Patentanspruches 1.

Ein Roller dieser Art ist aus der US 2474946 bekannt.

Ziel der Erfindung ist es, einen konstruktiv einfach aufgebauten Tretroller bzw. Scooter zu erstellen, der kurvenstabil zu lenken ist und großes Fahrvergnügen bietet. Tretroller sind wohl bekannt und werden sowohl von Erwachsenen als auch von Kindern für Spiel und Sport verwendet. Derartige Roller besitzen einen Rahmenteil, an dem ein Trittbrett befestigt oder ausgebildet ist. Das Trittbrett und/oder die Rahmenteile tragen eine vordere und eine hintere Radeinheit. Am Rahmen und/oder am Trittbrett ist eine Lenksäule befestigt, die auf dem Rahmenteil und/oder dem Trittbrett befestigt ist und verschwenkbar gelagert sein kann, sodass der Roller zusammengeklappt werden kann. Die Lenksäule kann im oberen Lenkbereich mit einem Griff oder einem Lenker versehen sein. An dem Rahmen oder an dem Trittbrett ist eine vordere Radeinheit, insbesondere unterhalb der Lenksäule, angebracht und mit der Lenksäule bzw. dem daran befindlichen Handgriff bzw. Lenker kann durch Verdrehen der Lenksäule um deren Achse eine Fahrtrichtungsänderung durch Verdrehen der Räder herbeigeführt werden.

Ziel der Erfindung ist die Erstellung eines Rollers mit einer Lenktechnik, die ein sportliches Fahren ermöglicht, wobei jedoch die Möglichkeit gegeben sein soll, den Roller auch mit einer Hand lenken zu können, sodass sein Handling verbessert wird. Der erfindungsgemäße Roller soll vor allem die Aufgabe lösen, ein Sportgerät bzw. ein Fortbewegungsmittel zu schaffen, welches den sportlichen Charakter des Benutzers herausfordert, da eine gewisse Geschicklichkeit, insbesondere ein höheres Gleichgewichtsgefühl als bei einem herkömmlichen Roller erforderlich ist. Ferner soll durch eine einfache Einhandlenkung mit einer vorzugsweise vertikalen Lenksäule die Bedienung bzw. der Betrieb erleichtert werden. Des Weiteren sollen durch spezielle Ausbildung der Lagerung und Aufhängung der Radeinheiten eine bessere Richtungsstabilität und ein verbessertes Fahrverhalten ermöglicht werden, als dies mit herkömmlichen Rollern möglich ist.

Die Erfindung löst diese Aufgabe mit den im Kennzeichen des Anspruches 1 angeführten Merkmalen. Bei dem erfindungsgemäßen Roller, der einen Rahmen und ein mit dem Rahmen verbundenes oder ein vom Rahmen gebildetes Trittbrett umfasst, wobei an dem Rahmen und/oder dem Trittbrett zumindest eine für die Richtungslenkung erforderliche Radeinheit angebracht ist, ist vorgesehen, dass eine definierte Links- oder Rechtsauslenkung der Radeinheit allein durch das Kippen des Sportgerätes, das heißt des Trittbrettes und/oder einer allenfalls vorgesehenen Lenksäule nach links oder nach rechts erfolgen kann. Die Radeinheit bzw. der Träger der Radeinheit wird bei einem Kippen des Rahmens bedingt durch eine Fußbewegung oder durch Bewegung der Lenksäule durch den ausgeübten Druck um die Schwenkachse verschwenkt, sodass die Radeinheit von ihrer geradeaus gerichteten Position in eine Richtung ausgelenkt wird, die der Richtung des aufgebrachten Drucks bzw. der Kippbewegung entgegengesetzt gerichtet ist. Beim Verkippen des Rahmens wird die kippfest mit dem Rahmen verbundene Schwenkwelle mitverkippt und verbleibt in der Längsmittelebene des Rollers. Die Radachse kann dabei um die Schwenkachse verdreht werden.

Es wird hier vermerkt, dass das Vorhandensein bzw. Anbringen einer Lenksäule bzw. eines Lenkers nicht zwingend erforderlich ist. An sich kann der Roller als Sportgerät auch ohne Lenksäule verwendet werden und allein durch Ausübung eines entsprechenden Fußdruckes gelenkt werden. Dabei werden an die Geschicklichkeit des Fahrers allerdings höhere Anforderungen gestellt.

Es ist zumindest eine Radeinheit vorgesehen, die auf einem um die definierte Schwenkachse verschwenkbaren Träger gelagert. Dies ist die vordere Radeinheit. Es ist allerdings auch möglich, auch die vordere sowie die hintere Radeinheit auf Trägern auslenkbar bzw. verschwenkbar zu lagern. Es ist vorgesehen, dass die jeweilige Radachse in einem vorgegebenen Abstand von der Schwenkachse angeordnet ist und/oder dass auf der Schwenkwelle ein in der senkrecht verlaufenden Ebene um die Schwenkachse verschwenkbarer Träger gelagert oder gelegen ist, der die Radachse trägt oder dass die jeweilige Radachse in der senkrecht verlaufenden Ebene um die Schwenkachse verdrehbar auf der Schwenkwelle gelagert ist und/oder dass bei für Geradeausfahrt ausgerichtetem Roller die Radachsen senkrecht zur Mittelebene des Rollers stehen. Damit wird eine leichte und empfindlich und exakt reagierende Steuerung des Rollers erreicht.

Die hintere Radeinheit kann erfindungsgemäß wie die vordere Radeinheit ausgerichtet sein oder in konventioneller Bauweise vorgesehen sein, vergleichbar mit einem Hinterrad einer herkömmlichen Rollerkonstruktion, das auf einer Starrachse gelagert ist.

Das Verkippen des Trittbretts bzw. des Rahmens um die Längsachse des Rollers bzw. des Trittbretts erfolgt in der Weise, dass auf das mit dem Rahmen verbundene bzw. Teil des Rahmens bildende Trittbrett durch seitliche Auslenkung der Lenkstange oder entsprechende Druckausübung und Verkippen des Trittbrettes auf das Trittbrett ein Kippen des Rahmens und des Trittbretts um die Längsachse des Rollers hervorgerufen wird, wodurch über die Schwenkwelle eine Bewegung der Radachse und somit der Radeinheit in Form eines Verschwenkens nach links oder rechts erreicht wird. Ein Verkippen nach Rechts leitet eine Rechtskurve ein und umgekehrt.

Von besonderem Vorteil ist es, wenn der vordere Rahmenteil nach unten geneigt vom Trittbrett weg gerichtet verläuft und von dem Rahmenteil die die Schwenkachse definierende Schwenkwelle nach unten in Richtung Trittbrett abgeht. Mit dieser Konstruktion wird eine sehr empfindliche Reaktion der Radeinheiten bei einem Verschwenken des Rahmenteiles bzw. der Trittfläche durch Fußdruck und/oder seitliches Verschwenken der Lenksäule erreicht. Eine baulich einfache Konstruktion ergibt sich, wenn die Schwenkachse und der Rahmenteil einen Winkel von 90° einschließen.

Erfindungsgemäß kann vorgesehen sein, dass am Rahmen und/oder dem Trittbrett eine im Bezug auf das Trittbrett nach oben abgehende Lenksäule, gegebenenfalls schwenkbar und arretierbar, befestigt ist. Der Roller kann somit durch Fußdruck und/oder mit der Lenksäule gelenkt werden. Eine Ausführungsform eines Rollers mit einer Lenksäule ist für weniger sportliche bzw. weniger geübte Fahrer von Vorteil.

Für die Fahrtsicherheit und die Bedienbarkeit ist es von Vorteil, wenn der am oberen Ende der Lenkstange vorgesehene Handgriff in Fahrtrichtung nach vorne geneigt ist und/oder dass von der Lenksäule oder einer daran befestigten Lenker- oder Griffstange eine Betätigungsvorrichtung für eine Handbremsvorrichtung vorgesehen ist.

Ein einfacher Aufbau einer Lagerung für die Schwenkwelle ergibt sich, wenn der Träger einen rohrförmig ausgebildeten Endteil aufweist oder eine Lagerhülse bzw. -ausnehmung ausbildet und damit auf der Schwenkwelle gelagert und/oder auf die Schwenkwelle aufgesteckt ist. Es kann auch vorgesehen sein, dass die Schwenkwelle stabförmig ausgebildet ist oder einen stabförmigen Endbereich umfasst und von einem Drehlager oder einer Drehhülse im Rahmenteil aufgenommen ist.

Eine besonders stabile Fahrt ergibt sich, wenn bei Ausrichtung des Rollers für Geradeausfahrt des Rollers die jeweilige Radachse auf einem höheren Niveau liegt als der Schnittpunkt der Schwenkachse mit der die Radachse aufnehmenden senkrecht zur Schwenkachse verlaufenden Ebene.

Zur Verbesserung der Fahreigenschaften und Erhöhung der Fahrsicherheit kann vorgesehen sein, dass eine Federeinheit vorgesehen ist, die mit ihrem einen Ende am Träger oder an der Schwenkwelle und mit ihrem anderen Ende am Rahmen befestigt ist und die Radachse oder die Radeinheit in Fahrtrichtung für eine Geradeausfahrt ausrichtet bzw. drückt.

Es hat sich als zweckmäßig erwiesen, wenn die Schwenkwelle vom Rahmenteil nach hinten in Richtung Trittbrett abgeht und einen Winkel mit der Aufstandsebene einschließt, dessen Scheitel in Richtung Trittbrett weist und/oder wenn der gesamte Systemwinkel (=einzelner Winkel bei nur einer lenkbaren Radeinheit bzw. die Winkelsumme bei zwei lenkbaren Radeinheiten) der Schwenkachse(n) und/oder der jeweiligen Schwenkwelle(n) zur Aufstandsebene zwischen 10° und 90°, vorzugsweise zwischen 25 und 85°, insbesondere zwischen 40 und 80°, liegt. Dieser Winkelbereich ergibt eine gute Bedienbarkeit und Handhabbarkeit des Rollers insbesondere beim Kurvenfahren.

Eine vorteilhafte konstruktive Ausführungsform des Rollers ergibt sich, wenn vorgesehen ist, dass der Rahmen vom Trittbrett nach vorne abgehende, winkelig zueinander verlaufende Rahmenteile umfasst, wobei der dem Trittbrett ferner liegende Rahmenteil die Schwenkwelle trägt und/oder dass von zumindest einem dieser Rahmenteile die Lenksäule getragen ist.

Ein einfacher Aufbau ergibt sich, wenn der Rahmenteil unter einem Winkel zur Aufstandsfläche geneigt verläuft und in seinem Endbereich die Schwenkwelle und den auf dieser gelegenen Träger trägt.

Bei einer weiteren Ausführungsform eines Rollers, insbesondere eines Rollers, bei dem sowohl die vordere Radeinheit als auch die hintere Radeinheit von einem um eine Schwenkwelle schwenkbar gelagerten Träger getragen ist, ist es vorteilhaft, wenn das Trittbrett auf einem Niveau unterhalb einer Verbindungslinie der Radachse der vorderen Radeinheit mit der Radachse der hinteren Radeinheit liegt.

Um ein Übersteuern bzw. das Fahren von Kurven mit zu kleinem Radius bei zu großer seitlicher Verschwenkung der Lenksäule oder bei Ausübung eines zu großen Kippdruckes auf die Trittfläche zu vermeiden, kann vorgesehen sein, dass der Schwenkwinkel der Radeinheit und/oder des Trägers um die jeweilige Schwenkachse und/oder bezüglich einer vertikalen Achse oder der Achse der Lenksäule von einer Begrenzungseinheit, z.B. einem Anschlag, begrenzt ist.

Eine einfache Bedienung des Rollers ergibt sich, wenn die Lenkstange an ihrem oberen, trittbrettfernen Ende ein quer verlaufendes Griffstück als Haltestück für Einhandbetrieb trägt.

Bei einer besonders vorteilhaften Ausführungsform eines erfindungsgemäßen Rollers ist vorgesehen, dass die, die Radeinheit abstützenden Radachsen jeweils zwei Radachsen umfassen, die von einem auf der Schwenkwelle verschwenkbar gelagerten Träger abgehen und jeweils ein Rad tragen und/oder dass die Radachsen bei Geradeausfahrt des Rollers in einer Vertikalebene liegen, die senkrecht zur Längsrichtung des Rollers steht und die Achsen mit der Aufstandsebene einen Winkel von 5° bis 40°, vorzugsweise 10° bis 30°, insbesondere 15° bis 25°, einschließen und/oder dass die Auflagepunkte der Räder auf der Aufstandsebene in dieser Vertikalebene liegen.
Ziel bei diesem vorteilhaft gestalteten Roller ist es, einen konstruktiv einfach aufgebauten Tretroller bzw. Scooter zu erstellen, der kurvenstabil zu lenken ist und großes Fahrvergnügen bietet und bei dem ein unerwünschtes Kippen derselben auch bei höheren Kurvengeschwindigkeiten vermieden wird.

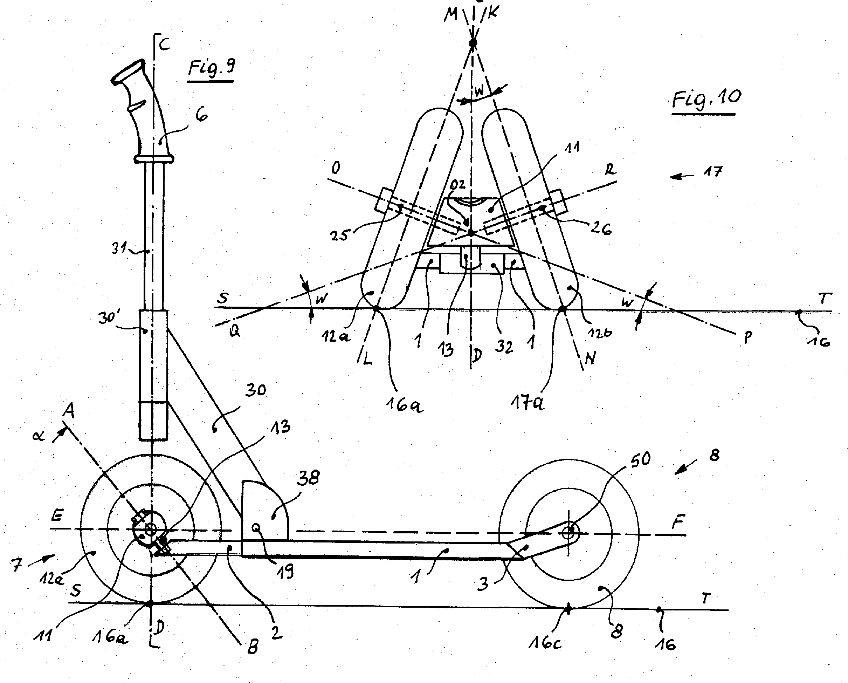

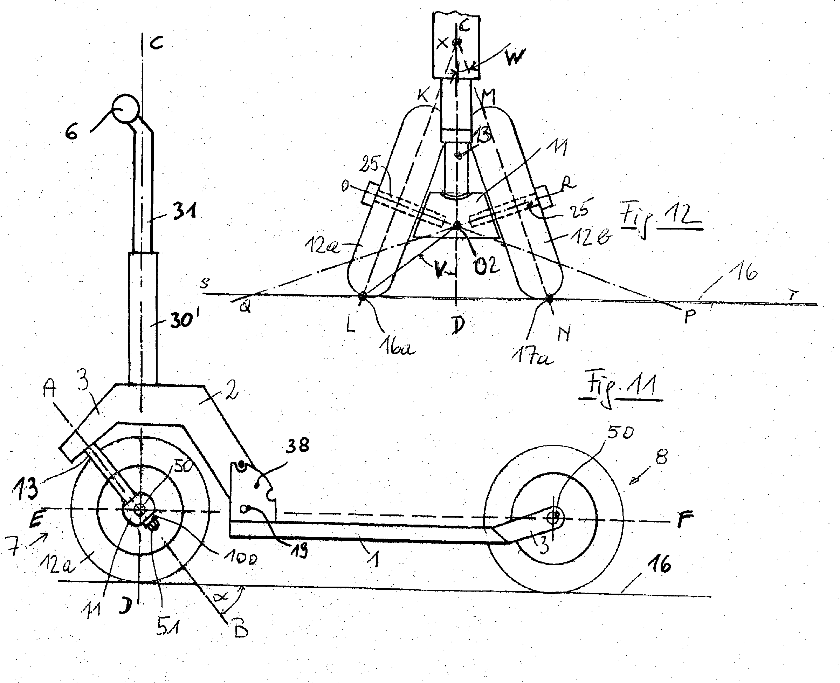

Es ist vorgesehen, dass auf der Schwenkwelle ein in einer senkrecht verlaufenden Ebene um die Schwenkachse verschwenkbarer Träger gelagert oder gelegen ist, der die beiden seitlich abstehenden Radachsen trägt. Bei für Geradeausfahrt ausgerichtetem Roller stehen die Radachsen vorzugsweise nicht senkrecht zur Mittelebene des Rollers ab sondern weisen in der Vertikalebene winkelig nach oben, so dass in Folge die beiden Räder der lenkbaren Radeinheit nicht mehr parallel zueinander angeordnet sind, sondern von vorne betrachtet vergleichbar mit dem Großbuchstaben A im oberen Bereich nahe beieinander stehen und im unteren Bereich weiter entfernt sind. Damit wird einerseits eine leichte und empfindlich und exakt reagierende Steuerung des Rollers erreicht bzw. wird andererseits das Kippen der Radeinheit bei größeren Kurvenkräften vermieden, weil die in der Kurvenfahrt auf das am äußeren Rad wirkenden Kräfte eben winkelig gegen die befahrene Fläche wirken, wobei sich eine Radaufhängung/Radachse näher am Rollerrahmen befindet als der zum Erdboden weisende untere Auflagepunkt eines Rades (Fig.10 / Fig.12).

Die hintere Radeinheit kann bei einem derartigen Roller wie die vordere Radeinheit ausgebildet oder in wie zuvor bei den anderen Ausführungsformen beschriebener Bauweise vorgesehen sein, oder auch vergleichbar mit einem Hinterrad einer herkömmlichen Rollerkonstruktion, das auf einer Starrachse gelagert ist, ausgebildet sein.

Für die Fahrtsicherheit und die Bedienbarkeit ist es von Vorteil, wenn die Lenksäule über ein an deren oberen Ende befestigtes Handgriffstück verfügt welches in Fahrtrichtung gesehen nach vorne geneigt ist, was der natürlichen Position der beim Halten der Lenkstange abgewinkelten Hand entgegenkommt.

Die Fahreigenschaften des Rollers können konstruktiv beeinflusst werden, indem die Radachsen von in Fahrtrichtung vor und hinter dem Trittbrett liegenden Radeinheiten auf gleichem Niveau und/oder oberhalb des Niveaus des Trittbretts angeordnet werden.

Eine besonders stabile Fahrt ergibt sich, wenn bei Ausrichtung des Rollers für Geradeausfahrt des Rollers die Radachsen auf einem höheren Niveau liegen als der Schnittpunkt der Schwenkachse mit der die Radachse aufnehmenden senkrecht zur Schwenkachse verlaufenden Ebene.

Zur Erhöhung der Fahrsicherheit beim Fahren von Kurven mit zu kleinem Radius bei zu großer seitlicher Verschwenkung der Lenksäule oder bei Ausübung eines zu großen Kippdruckes auf die Trittfläche, kann vorgesehen sein, dass die Drehbewegung des Radträgers auf dessen beiden äußeren Seiten im Bereich der maximal zulässigen Auslenkung mit einem Anschlag versehen ist, so dass das maximale Ausschwenken des Radträgers für Kurvenfahrten nach beiden Seiten begrenzt wird und eine Übersteuerung vermieden wird.

Im Folgenden wird die Erfindung anhand der Zeichnungen beispielsweise näher erläutert.

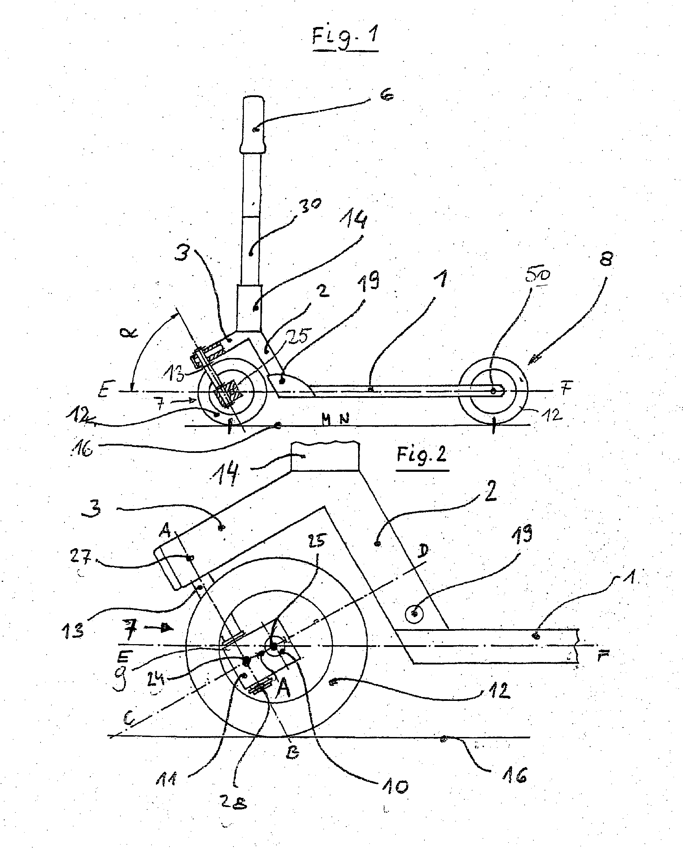

Die Fig. 1 bis 8 zeigen Ansichten von Rollern, die nicht den erfindungsgemäßen Merkmalen des Anspruchs 1 entsprechen. Zur Erläuterung des Aufbaus von Rollern per se und zum besseren Verständnis des erfindungsgemäßen Rollers, insbesondere der Lenkung des Rollers durch Wippen des Trittbretts, werden die Fig. 1 bis 9 und die zugehörige Figurenbeschreibung beibehalten.

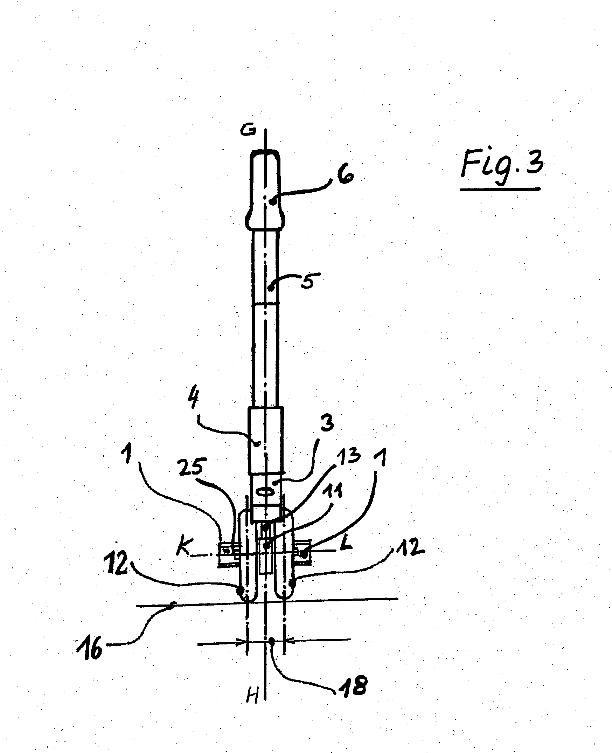

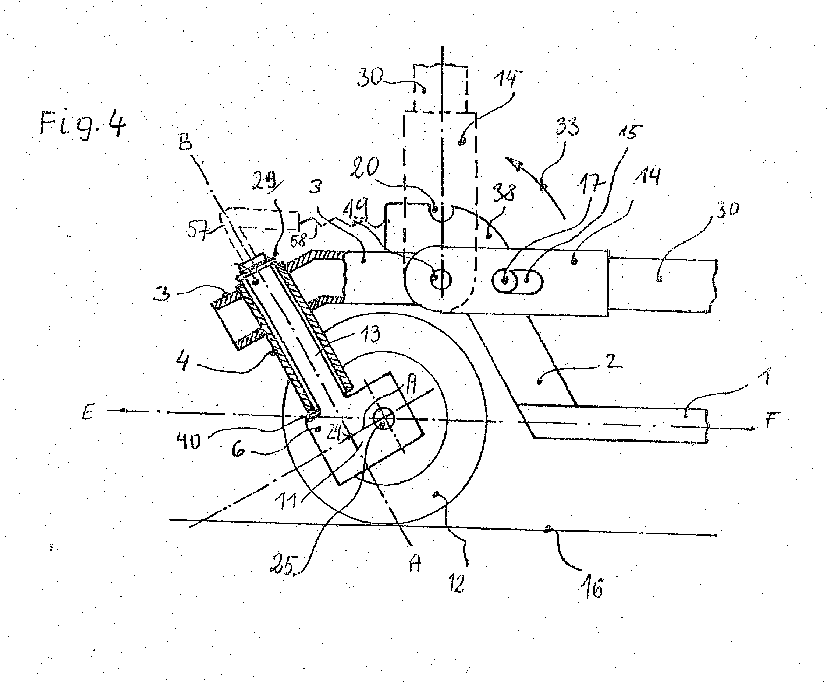

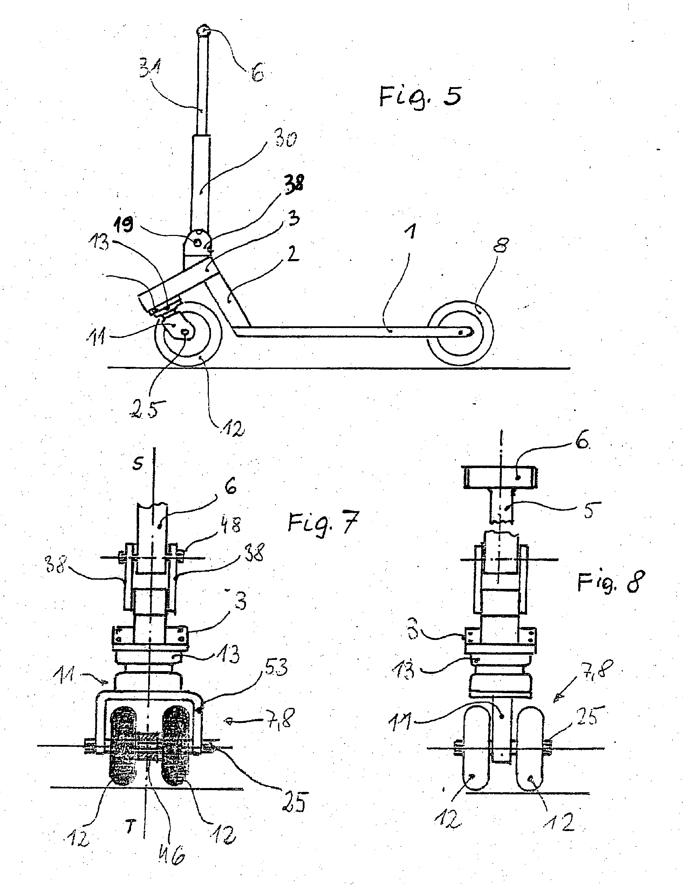

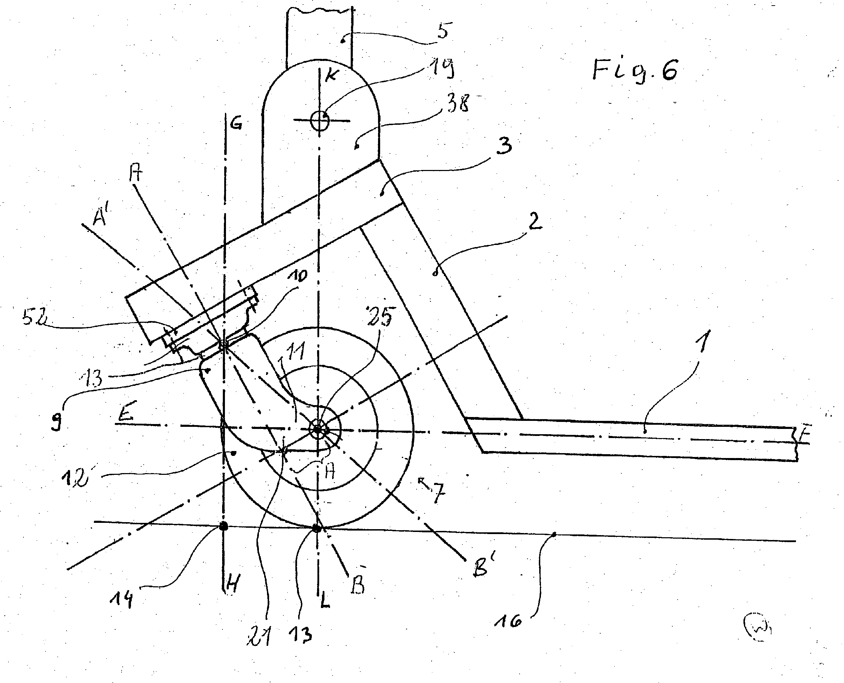

Fig. 1 zeigt eine schematische Seitenansicht einer ersten Ausführungsform eines Rollers. Fig. 2 zeigt eine Detailansicht der vorderen Radeinheit, Fig. 3 zeigt eine Vordersicht. Fig. 4 zeigt im Detail eine Ausführungsform eines Rollers mit einem an einer beweglichen Schwenkwelle befestigten Radträger. Fig. 8 zeigt eine Vordersicht von Rollern gemäß Fig. 5 bis 7. Fig. 5 und 6 zeigen in Seitenansicht eine Ausführungsform eines Rollers bzw. die Lagerung der Schwenkachse einer vorderen Radeinheit. Fig. 7 und 8 zeigen Vorderansichten des Rollers gemäß Fig. 5 und Fig. 6. Fig. 9 und 10 zeigen eine vorteilhafte Ausführungsform eines erfindungsgemäßen Rollers. In Fig. 10 und 12 sind die geneigten Vorderräder im Bereich des Laufflächenquerschnittes einfachheitshalber rund und nicht elliptisch dargestellt. Fig. 11 und 12 zeigen zwei besonders bevorzugte Ausführungsformen eines erfindungsgemäßen Rollers.

In den Zeichnungen ist der Roller in Geradeausfahrt ausgerichtet dargestellt, das heißt die Radachsen verlaufen in einer Ebene senkrecht zur Längsmittelebene des Rollers und auch der Träger liegt in dieser Ebene. Der Roller ist symmetrisch bezüglich seiner Längsmittelebene aufgebaut.

Fig. 1 zeigt einen Roller mit einem Trittbrett 1, das von einem Rahmen getragen bzw. mit diesem fest verbunden bzw. Teil dieses Rahmens ist. Dieser Rahmen umfasst zumindest zwei Rahmenteile 2, 3, die mit dem Trittbrett 1 verbunden sind. An sich könnte das Trittbrett 1 auch auf dem Rahmenteil 2 gelagert oder mit diesem integral ausgebildet sein oder selbst Teil des Rahmens sein. Der Teil des Rahmens, der beim Fahren von der Person belastet wird, stellt das Trittbrett dar. Wie das Trittbrett formmäßig ausgestaltet ist, ist nicht erheblich.

Im hinteren Endbereich des Rahmens bzw. des Trittbretts 1 ist mit einer starr gelagerten Radachse 50 ein herkömmliches Rad 12 gelagert. Diese hintere Radeinheit 8 ist mit der Radachse 50 am Trittbrett 1 oder am Rahmenteil 2, der gegebenenfalls durch das Trittbrett verlängert verläuft, gelagert.

Es ist möglich, Rahmenteile, vorzugsweise das Trittbrett 1 und den Rahmenteil 2, mit einem Schwenklager 19 bzw. über einen Schwenkbolzen verschwenkbar zu verbinden, um den Roller - wie an sich bekannt - zusammenklappen zu können.

Der Rahmenteil 2 geht bei dieser Ausführungsform in Fahrtrichtung vom Trittbrett 1 nach oben geneigt ab. An den Rahmenteil 2 schließt ein vorderer Rahmenteil 3 an, der mit dem Rahmenteil 2, beispielsweise durch Schweißen, verbunden ist. Der Rahmenteil 3 ist in Fahrtrichtung bzw. nach vorne unten geneigt. Von den Rahmenteilen 2 und 3 kann ein, gegebenenfalls von einem Rohrstück gebildetes, Verbindungsstück 14 verschwenkbar getragen sein, das mit der Lenksäule 30 verbunden ist, die in ihrem oberen Bereich einen Handgriff 6 trägt.

Vorteilhafterweise im vorderen Bereich des vorderen Rahmenteils 3 ist entweder starr oder verdrehbar eine Schwenkwelle 13 gelagert oder befestigt, die, wie in Fig. 2 dargestellt ist, eine Schwenkachse A, B definiert. Auf dieser Schwenkwelle 13 ist ein Träger 11 um die von ihr definierte Schwenkachse A, B verdrehbar gelagert, der die Radachse 25 der vorderen Radeinheit 7 trägt. Bei einer verdrehbar gelagerten Schwenkwelle 13 kann der Träger 11 mit der Schwenkwelle 13 fest verbunden sein.

Der Winkel/die Winkelsumme des Winkels α zwischen der Aufstandsfläche 16 und der Schwenkachse A, B bzw. der Schwenkwelle 13 beträgt 10° bis 90°, vorzugsweise 25 bis 85°, insbesondere 40 bis 80°.

Es ist fahrtechnisch von Vorteil, wenn die vordere Radeinheit 7 von zwei in einem vorgegebenen Abstand 18 nebeneinander angeordneten Rädern 12 gebildet ist, wobei die gemeinsame Radachse 25 dieser Räder 12 vom Träger 11 getragen ist, wie in Fig. 3 dargestellt ist.

Die Radachse 25 liegt somit in Fahrtrichtung gesehen hinter der Schwenkachse A, B, die durch die Schwenkwelle 13 definiert wird, die vom Rahmenteil 3 nach unten und nach hinten in Richtung auf das Trittbrett 1 hin abgeht. Prinzipiell kann die Radachse 25 auch vor der Schwenkachse A, B liegen, diese Position führt aber zu einem labileren Lenkverhalten des Scooters mit einer deutlichen Neigung zur Übersteuerung.

Die Radachse 25 der Radeinheit 7 liegt im Abstand A zur Schwenkachse A, B, und zwar auf einer zur Schwenkachse A, B senkrechten Geraden C, D im Abstand A von der Schwenkachse A, B. Dieser Abstand A ist durch den Mittelpunkt der Radachse 25 und dem Punkt 24, in dem die Gerade die Schwenkachse A, B schneidet, gegeben. Die Gerade C, D, auf der der Abstand A liegt, verläuft senkrecht zur Schwenkachse A, B durch den Punkt 24 und durch die Radachse 25. Die Radachse 25 liegt somit in einer Ebene, die senkrecht zur Schwenkachse A, B im Punkt 24 verläuft und die Gerade C, D enthält und ist um die Schwenkachse A, B verdrehbar. Der Abstand A zwischen dem Punkt 24 und der Radachse 25 ist vorgesehen und wählbar, um bei einer Verkippung die Radeinheit 7 zu verstellen. Damit kann die Radeinheit 7 auch in einen geschleppten Zustand verstellt werden, wodurch die Stabilität der Radeinheit 7 für eine Geradeausfahrt sichergestellt wird. Prinzipiell könnte die Radeinheit 7 auch vorlaufend geführt sein.

Der in Fig. 1 dargestellte Radabstand MN der auf der Aufstandsebene 16 stehenden Räder 12 und die Neigung der Schwenkachse A, B zur Längsachse E, F des Rollers beeinflussen die Auswirkungen einer seitlichen Verkippung der Lenksäule 30 bzw. eines das Trittbrett 1 verkippenden seitlichen Druckes in Hinblick auf das Ausmaß des Verschwenkens des Trägers 11 um die Schwenkwelle 13. Wenn der Winkel α kleiner gewählt wird, vergrößert sich der Rollradius in Bezug auf die Kippgröße um die Längsachse E, F und wenn der Winkel α größer wird, verkleinert sich der Rollradius im Verhältnis zu einer Kippbewegung um die Längsachse E, F. Weiters führt eine Vergrößerung des Abstandes A zwischen den Punkten 24 und der Radachse 25 auf der Geraden C, D in Richtung D zu einer Erhöhung der Richtungsstabilität, und eine Verkleinerung des Abstandes A führt zu einer Verringerung der Richtungsstabilität. Wenn die Radachse 25 den Punkt 24 nach links in Fig. 2 überschreitet, wird das Fahrverhalten instabil. Die Fahrstabilität des Rollers verbessert sich auch dann, wenn die durch das Trittbrett 1 verlaufende Längsachse E, F sich auf einem Niveau befindet, das der Höhe der Radachse 25 entspricht oder wenn die Längsachse E, F unterhalb des Niveaus der Radachse 25 liegt.

Die Lenkung des Rollers basiert im Wesentlichen darauf, dass die vordere und hintere Radeinheit 7, 8 entlang der Längsmittel- bzw. Symmetrieebene des Rollers insbesondere mittig und fluchtend angeordnet sind, und dass durch ein seitliches Verkippen der Trittfläche 1 bzw. der Lenksäule 30 bezüglich der Längsachse E, F auch die Schwenkwelle aus der mittigen, senkrechten Position in eine dem Verkippen entsprechende entgegengesetzte Richtung verkippt wird. Wird beispielsweise die Lenksäule 30 bezüglich der Längsachse E, F nach rechts gekippt, so bewegt sich der Punkt 28 auf der Schwenkwelle 13 nach links. Des Weiteren wird dabei durch den resultierenden Hebel zwischen dem Punkt 24 und dem Auflagepunkt des Rades 12 auf der Aufstandsebene 16 die Radeinheit 7 gleichsinnig der Kippbewegung der Lenksäule 30 bzw. des Trittbretts 1 nach rechts verdreht. Dabei folgt die frei drehbare Radeinheit der Richtung der ausgelenkten Schwenkwelle zwingend gegen die konstant gleichbleibende Position der Aufstandsfläche gegen die die Radeinheit mit der Kraft des auf den Scooter von oben einwirkenden Gewichtes. Diese Verdrehung erfolgt umso stärker, je größer der Winkel α gewählt wird. Die Auslenkung der Radeinheit 7 infolge eines Kippens der Lenksäule 30 oder der Trittfläche 1 erfolgt dann in ausreichender Form, wenn, wie in Fig. 3 dargestellt ist, der Abstand 18 zwischen den beiden Rädern 12 so groß ist, dass die erforderliche Kraft für das Auslenken bzw. Verdrehen der Radeinheit 7 aufgebaut werden kann. Dies bedeutet, dass bei Vergrößerung des Winkels α die Lenkkraft ansteigt und infolgedessen der Abstand 18 zwischen den beiden Rädern 12 entsprechend größer zu wählen ist.

Die erforderliche Größe des Radabstandes 18 hängt auch vom konstruktiv erforderlichen Bewegungsbereich des Druckpunktes bzw. Angriffspunktes der Kippkraft an der Schwenkachse 13 ab. Wenn dieser Punkt außerhalb der jeweils durch die Räder 12 der Radeinheit 7 definierten parallelen Ebenen verstellt wird bzw. dieser Punkt einen Abstand zur Längsmittelebene des Rollers einnimmt, der größer als der Abstand 18 ist, kippt das Lenksystem. Die Radeinheit legt sich quer und es erfolgt ein Totalausfall der Lenkung.

Bei einer vorteilhaften Ausführungsform kann vorgesehen sein, dass die Radeinheit 7 einen Gabelträger umfasst, der die Radachse 25 trägt. Die Räder 12 sind nebeneinander angeordnet oder abstandsgleich bezüglich der distanzierten Räder zu einer Rolle zusammengefasst und liegen zwischen den Gabeln des Gabelträgers. Der Gabelträger ist mit einem Fortsatz am Träger 11 befestigt bzw. oder der als Träger dienende Fortsatz ist gegebenenfalls schwenkbar auf der Schwenkwelle 13 gelagert oder auf diese aufgesteckt oder eingesteckt.

Es ist von Vorteil, wenn die Radeinheit 7 von zwei Rädern 12 gebildet ist, die in einem Abstand 18 voneinander gelegen sind. Das Hinterrad ist bei der Ausführungsform gemäß den Fig. 1 bis 4 ungelenkt bzw. starr auf der Radachse 50 gelagert, kann prinzipiell jedoch bei dieser und allen anderen Ausführungsformen ebenfalls als lenkende Radeinheit so wie die vordere Radeinheit ausgebildet werden.

Für die Praxis zeigte es sich, dass bei einer Ausführungsform eines Rollers, so wie dieser in den Fig. 1 bis 3 beschrieben wurde, ein Winkel α von 30 bis 40° zu größeren Rollradien und dafür zu einem stabileren Richtungsfahrverhalten führt, im Vergleich zu einem Winkel α von beispielsweise 70 bis 80°, wenn man in beiden Fällen das seitliche Verkippen der Lenksäule 30 bzw. des Trittbrettes 1 gleich wählt. Je kleiner der Winkel α konstruktionsbedingt gewählt wird, umso größer wird der minimale Rollradius bei gleichem Lenkausschlag der Lenkstange.

Beim Fahren steht der Fahrer des Rollers mit einem Bein auf der Trittfläche 1 des Rollers und hält mit einer Hand das Griffstück 6 der Lenksäule 30 und fährt im ausbalancierten Zustand geradeaus. Eine Kurve kann eingeleitet werden, indem die Lenksäule 30 nach einer Seite verschwenkt wird, ohne dass dazu eine Veränderung des Schwerpunktes erforderlich ist. Eine Kurvenfahrt wird durch ein Verschwenken der Trittfläche 1 bzw. der Rahmenteile 2, 3 um die Längsachse E, F und das dadurch zwingend erfolgende Auslenken der vorderen Radeinheit 7 und allenfalls auch einer hinteren Radeinheit 8 um die jeweilige Schwenkachse A, B erreicht. Erst wenn der Scooter in einen entsprechenden Rollradius einlenkt, nimmt der Fahrer entsprechend proportional zur Winkelgeschwindigkeit eine Schräglage ein, die zum Kurvenmittelpunkt hin gerichtet ist.

Bei der in Fig. 4 dargestellten Ausführungsform eines Rollers geht der Rahmenteil 2 vom Trittbrett 1 ab und geht in den Rahmenteil 3 über. Der Rahmenteil 3 trägt eine Drehhülse 4, in der die Schwenkwelle 13 verdrehbar gelagert ist. Die Schwenkwelle 13 ist bei dieser Ausführungsform einstückig mit dem Träger 11 ausgebildet. Die Schwenkwelle 13 definiert die Schwenkachse A, B, um welche der Träger 11 verschwenkbar ist. Der Träger 11 trägt die Radachse 25, auf der eine Rolle oder zumindest ein Rad 12, vorteilhafterweise zwei Räder 12, die den Träger 11 zwischen sich einschließen, drehbar gelagert sind.

Im Übergangsbereich vom Rahmenteil 2 in den Rahmenteil 3 ist ein Schwenklager 19 ausgebildet, in dem die Lenksäule 30 angelenkt ist. Die Lenksäule 30 ist dabei von einem Verbindungsstück 14 aufgenommen, das eine Ausnehmung 15 besitzt, in der ein Rastzapfen 17 gegen Federwirkung verstellbar gelagert ist, welcher Rastzapfen 17 von einer Rastausnehmung 20 aufgenommen werden kann, die in einer bogenförmig ausgestalteten Kurvenbahn 38 ausgebildet ist. Bei entsprechender Betätigung des Rastzapfens 17 kann die Lenksäule 30 in Richtung des Pfeiles 33 in die strichlierte Stellung verstellt und dort festgelegt werden.

Die Radachse 25 befindet sich auf dem Niveau der Trittfläche 1 und liegt entgegen die Fahrtrichtung versetzt hinter der Schwenkachse A, B. Die Radachse 25 kann wie bei allen Ausführungsformen auch höher oder tiefer liegen. Die Schwenkachse A, B ist im Winkel α zur Aufstandsebene 16 geneigt.

Auch bei dieser Ausführungsform eines Rollers ist die vordere Radeinheit 7 nicht mit der Lenksäule 30 verbunden, sondern wird vom Rahmen, das heißt vom Rahmenteil 3, getragen. Wie bei allen Ausführungsformen ist es auch bei dieser Ausführungsform möglich, die hintere Radeinheit 8 schwenkbar um eine Schwenkwelle 13 anzuordnen, z.B. auch eine Schwenkwelle, wie sie für die vordere Radeinheit 7 verwendet wird.

Die Hülse 4 ist fest und starr im vorderen Rahmenteil 3 gelagert und verläuft im Winkel α zur Aufstandsebene 16.

Die Positionierung der Schwenkwelle 13 in der Drehhülse 4 erfolgt durch eine Sicherung 29, beispielsweise einem Seegerring, und die Abstützung des Trägers 11 erfolgt zB durch ein Schrägkugellager als Stützfläche 40 in Form von auf die Drehhülse 4.

In Fig. 4 ist ein allgemein einsetzbares Beispiel für eine Rückstellung der Radeinheit 7 in Geradeausfahrtstellung des Rollers dargestellt. Mit 57 ist eine abgebogene Verlängerung der Schwenkwelle 13 bezeichnet. Das Ende dieser Verlängerung 57 ist über eine Zugfeder 58 mit dem Rahmenteil 3 oder der Kurvenbahn 38 verbunden. Bei einer Verdrehung der Schwenkwelle 13 um die Schwenkachse A, B wird die Verlängerung 57 gegen die Wirkung der Feder 58 verschwenkt und von dieser in ihre Ausgangslage in der Längsmittelebene des Rollers zurückgezogen.

Ganz allgemein und auch bei dieser Ausführungsform ist es möglich, die hintere Radeinheit 8 in derselben Weise auszubilden wie die vordere Radeinheit 7. In diesen Fällen ist die Trittfläche 1 durch einen dem Rahmenteil 3 entsprechenden Rahmenteil verlängert, der mit einer Schwenkwelle 13 die hintere Radeinheit 7 trägt.

Es ist von Vorteil, wenn der Schwenkwinkel der Schwenkwelle 13 und/oder des Trägers 11 bezüglich einer Vertikalen zur Aufstandsebene 16 durch Endanschläge auf einen vorgegebenen Bereich beschränkt ist, sodass die mit dem Roller zu fahrenden Kurven auf einen gewissen Mindestradius beschränkt sind.

Bei einer in Fig. 5 und 6 dargestellten Ausführungsform eines Rollers trägt der Rahmenteil 3 eine Schwenkwelle 13, die auf oder in einem vom Rahmenteil 3 getragenen Lager 52 verschwenkbar gelagert ist. Die Schwenkwelle 13 ist um die Schwenkachse A, B verdrehbar gelagert. Der dem Rahmenteil 3 ferne Endbereich der Schwenkwelle 13 ist gebogen ausgebildet und bildet den Träger 11 für die Radachse 25 aus. Dabei kann es sich um einen Gabelträger handeln, so wie er in Fig. 7 mit 53 bezeichnet ist und die Räder 12 von der Seite her umfasst. Es ist allerdings auch möglich, den Träger 11 derart auszubilden, wie er in Fig. 8 dargestellt ist.

Der Träger 11 trägt die Radachse 25 auf einem Niveau des Trittbretts 1. An sich kann die Radachse 25 auch ober oder unter diesem Niveau liegen. Des weiteren liegt bei Geradeausfahrt die Radachse 25 am Träger 11 im Normalabstand A hinter und oberhalb der Schwenkachse A, B. Vorteilhafterweise kann bei dieser Ausführungsform bzw. auch bei den zuvor beschriebenen Ausführungsformen vorgesehen sein, dass die Radachse 25 der vorderen Radeinheit 7 unterhalb der aufrecht gestellten Lenksäule 30 angeordnet ist bzw. unterhalb des Befestigungspunktes der Lenksäule 30 am Rahmenteil 3 und/oder Rahmenteil 2 liegt. Bei einer derartigen Lage wird eine rasche Verstellung der Radeinheit 7 bei einem seitlichen Verkippen der Lenksäule 30 bzw. der Trittfläche 1 erreicht.

Auch bei der Ausführungsform gemäß Fig. 6 liegt der Lagerbereich der Schwenkwelle 13 vor dem Anlenkpunkt der Lenksäule 30 am Rahmenteil 3 bzw. am Rahmenteil 2. Eine derartige Lagerung der Schwenkwelle 13 am vorderen Rahmenteil 3 kann auch bei den bereits zuvor beschriebenen Ausführungsformen von Rollern vorgesehen sein.

Allgemein ist es möglich, den Schwenkwinkel des Trägers 11 um die Schwenkachse A, B bzw. um die Schwenkwelle 13 mittels Anschlägen zu begrenzen.

Allgemein liegt der Bodenabstand des Lenkgriffes bzw. der Lenkstange 6 bei etwa 850 bis 1000 mm, wobei der Radabstand MN zwischen der vorderen und der hinteren Radeinheit 7, 8 etwa 550 bis 750 mm beträgt.

Ferner wird die Radeinheit 7 durchwegs bzw. in der Regel von zwei Rädern 12 gebildet.

Bei der Ausführungsform gemäß Fig. 6 ist es von Vorteil, dass der Träger 11 als Verlängerung der Schwenkachse 13 frei um die Schwenkachse A, B verschwenkbar gelagert ist. Es kann auch vorgesehen sein, dass der den Träger 11 darstellende Teil der Schwenkwelle 13 auf die Schwenkwelle 13 bzw. deren freies Ende aufgesetzt und dort, z.B. mit einer Schraube, festgelegt ist.

Auch bei dieser Ausführungsform können die Radeinheiten 7 und 8 vorzugsweise zwei, oder mehrere Räder oder auch eine Rolle umfassen.

Ganz allgemein und auch hier können Federeinheiten vorgesehen sein, mit denen der Träger 11 bzw. die Radeinheiten 7, 8 für eine Geradeausfahrt vorgespannt bzw. in eine neutrale Position für die Geradeausfahrt gedrückt bzw. verstellt werden. Der Winkel α beträgt bei der Ausführungsform gemäß Fig.6 20 bis 60°, vorzugsweise 30 bis 50°, und liegt bevorzugt bei etwa 45°. Die Radachse 25 liegt bei Geradeausfahrt im Bereich zwischen der Schwenkachse A, B und dem Trittbrett 1.

Ganz allgemein und wie bei den zuvor erörterten Ausführungsformen kann auch bei einem Roller, so wie er in Fig. 9 und 10 dargestellt ist, die Lenksäule 30 zweiteilig ausgebildet sein und der Lenker bzw. Griff 6 kann von einem Lenkerrohr 31 getragen sein, das in die Lenksäule 30 einschiebbar ist.

Fig. 7 und 8 zeigen bei allen Ausführungsformen einsetzbare, jeweils mit zwei Rädern ausgestattete, unterschiedlich aufgebaute Radeinheiten 7 bzw. 8, bei denen der Träger 11 entweder zwischen zwei Rädern 12 angeordnet ist oder als Gabelträger 53 ausgebildet ist, der die von einem Distanzstück 46 in Abstand gehaltenen Räder 12 oder allenfalls auch eine Rolle umgreift.

Ganz allgemein gilt, dass die Räder 12 auf den Radachsen 25 entweder frei drehbar gelagert sein können oder dass die Räder 12 mit den Radachsen 25 fest verbunden sein können, in welchem Fall die Radachsen 25 im jeweiligen Träger 11 in Lagern drehbar gelagert sind.

Prinzipiell kann vorgesehen sein, dass die Radeinheiten 7, 8 bzw. der Träger 11 in einem Winkel von 360° um die Schwenkachse A, B verdrehbar gelagert sind. Um jedoch eine Stabilisierung des Rollers zu erreichen, wird dieser Winkel vorteilhafterweise mit Anschlägen auf einen vorgegebenen Winkelbereich beschränkt.

Ganz allgemein ist zu bemerken, dass das Trittbrett 1 von einem verbreiterten Rahmenteil 2 ausgebildet sein kann und abhängig von der jeweiligen Rahmen- und Trittbrettkonstruktion unterschiedliche Lage, Form und Aufbau besitzen kann.

Es zeigte sich, dass es von Vorteil ist, wenn die Radeinheiten 7, 8, insbesondere jedoch die vordere Radeinheit, jeweils von zwei beabstandeten Rädern gebildet sind.

Es ist möglich, jeweils zwei der dargestellten und beschriebenen unterschiedlichen Ausführungsformen von Schwenkwellen 13 mit Träger 11 und Radeinheiten 7, 8 an einem Roller zu kombinieren, ohne Verlust an Stabilität oder Fahrverhalten.

Bei keiner Ausführungsform der erfindungsgemäßen Roller sind die Radeinheiten 7, 8 mit einer Lenkstange bzw. -säule 30 direkt lenkbar oder verstellbar. Das Auslenken oder Lenken der Radeinheiten 7, 8 erfolgt ausschließlich durch seitliches Verkippen der Lenksäule 30 und/oder des Trittbrettes 1.

Der Winkel α der Schwenkachse A, B zur Aufstandsfläche wird dann gemessen, wenn die jeweilige Radeinheit 7, 8 in Fahrtrichtung bzw. für Geradeausfahrt ausgerichtet ist bzw. der Roller aufrecht auf der Aufstandsfläche 16 steht. Die Schwenkwelle 13 und der Träger 11 liegen in dieser Stellung in der Längsmittelebene des Rollers, die Radachsen 25 stehen in horizontaler Blickrichtung senkrecht zur Längsmittelebene.

Die Lenksäule 30 ist im Betrieb kipp- und schwenkfest mit den Rahmenteilen 2 und/oder 3 und/oder dem Trittbrett 1 verbunden. Das Trittbrett kann eben oder gebogen verlaufen.

Die Schwenkwelle 13 und/oder der Träger 11 verschwenken oder verdrehen sich um die definierte Schwenkachse A, B beim Kippen der Lenksäule 30 oder des Trittbrettes 1. Dies gilt insbesondere dann, wenn der Träger 11 und die Schwenkwelle 13 fest verbunden sind. Wenn der Träger 11 auf der bzw. um die Schwenkwelle 13 verschwenkbar gelagert ist, verläuft die Schwenkachse A, B durch die Schwenkwelle 13. Sind die Schwenkwelle 13 und der Träger 11 fest verbunden, wird die Schwenkachse A, B durch die Achse definiert, um die die Rotation bzw. Verschwenkung des Trägers 11 bei Verdrehung der Schwenkwelle 13 erfolgt.

Vom Trittbrett 1 kann nach vorne und/oder nach hinten eine Aufbiegung abgehen, welche die Rahmenteile 2, 3 ersetzt.

Die Radachse 25 verläuft senkrecht zur Längsmittelebene des Rollers. Die Räder 12 liegen im Abstand 18 zur Längsmittelebene.

Im trittbrettnahen Endbereich der Schwenkwelle und/oder im trittbrettfernen Endbereich der Schwenkwelle 13 können Mittel zur Begrenzung des Verdrehwinkels S der Schwenkwelle und/oder des Trägers ausgebildet sein.

Prinzipiell könnte eine Einheit zur Begrenzung des Schwenkweges auch an dem Trittbrett vorgesehene Anschläge besitzen, die in Form von Vorsprüngen ausgebildet sind und nach oben oder unten vom Trittbrett 1 abgehen, gegen welche Vorsprünge die Seitenflächen 65 des Trägers 11 und/oder der Schwenkwelle 13 anlegbar sind. Die Anschlagflächen können mit elastischen Dämpfungsanschlägen versehen sein.

Fig. 9 zeigt einen Roller im Seitenriss und Fig. 10 zeigt eine Vorderansicht einer Radeinheit. Fig. 9 zeigt einen Roller, der vom Prinzip her gleich aufgebaut ist wie die bisher beschriebenen Roller und auch deren Merkmale - so weit sie kompatibel sind - aufweisen kann. Der Roller umfasst ein Trittbrett 1, das von einem Rahmen 2 getragen bzw. mit diesem fest verbunden bzw. Teil dieses Rahmens ist. Dieser Rahmen 2 umfasst das Trittbrett 1 und einen Rahmenteil 3, und einem Teil 30. An sich könnte das Trittbrett 1 auch auf dem Rahmenteil 2 gelagert oder mit diesem integral ausgebildet sein. Der Teil des Rahmens, der beim Fahren von der Person belastet wird, stellt auch hier das Trittbrett 1 dar. Wie das Trittbrett 1 formmäßig ausgestaltet ist, ist nicht erheblich.

Im hinteren Endbereich des Rahmens bzw. des Trittbretts 1 ist auf dem Rahmenteil 3 mit einer starr gelagerten Radachse 50 ein herkömmliches Rad 8 gelagert. Diese hintere Radeinheit 8 ist mit der Radachse 50 am Trittbrett 1 bzw. am gabelförmig gestalteten hinteren Rahmenteil 3 oder am Rahmenteil 2, der gegebenenfalls durch das Trittbrett 1 verlängert verläuft, gelagert.

Es ist möglich, den Rahmenteil 30 mit dem Trittbrett 1 und dem Rahmenteil 2 mit einem Schwenklager 38 bzw. über einen Schwenkbolzen 19 verschwenkbar zu verbinden, um den Roller - wie an sich bekannt - zusammenklappen zu können.

Der Rahmenteil 30 geht bei dieser Ausführungsform in Fahrtrichtung vom Trittbrett 1 nach oben geneigt ab. An den Rahmenteil 30 schließt ein vorderer Rahmenteil 30' an, der mit dem Rahmenteil 30, beispielsweise durch Schweißen, verbunden ist. Der Rahmenteil 30' ist in der Verlängerung der Lenksäule 31 nach unten verlängert bzw. trägt die Lenksäule 31, wobei die Lenksäule 31 als Teleskoplenksäule mit den Abschnitten 30' und 31 ausgebildet sein kann und in ihrem oberen Bereich eine Griffstück 6 trägt.

Das Trittbrett 1 besitzt an seiner in Fahrtrichtung vorderen Seite den Rahmenteil 2, welcher in seinem vorderen Bereich die winkelig abstehende Schwenkwelle 13 trägt. Auf dieser Schwenkwelle 13 ist ein Träger 11 um die von ihr definierte Schwenkachse A, B verdrehbar gelagert, der die Radachsen 25, 26 der vorderen Radeinheit 7 trägt. Bei einer im Rahmenteil 2 verdrehbar gelagerten Schwenkwelle 13 kann der Träger 11 mit der Schwenkwelle 13 fest verbunden sein.

Der Winkel α zwischen der Aufstandsfläche 16 und der Schwenkachse A, B bzw. der Schwenkwelle 13 beträgt 10° bis 90°, vorzugsweise 25 bis 85°, insbesondere 40 bis 75° bei 1 lenkbaren Radeinheit, bzw. als Winkelsumme bei 2 lenkbaren Radeinheiten.

Der Radachsenträger 11 der Radeinheit 7 gemäß Fig. 10 verfügt über die beiden vorzugsweise von Achsbolzen gebildeten Radachsen 25 und 26, welche winkelig nach oben abstehen, wobei der Achsbolzen 25 einen Winkel zur Aufstandsfläche 16 einnimmt und zwar zwischen der Aufstandsfläche 16 bzw. der Ebene ST einerseits und der Achse bzw. Geraden OP anderseits, bzw. der Achsbolzen 26 schließt einen Winkel mit der Ebene ST und der Geraden QR ein. Die Winkel sind gleich groß. Eine senkrechte Ebene zu dem Achsbolzen 25 besitzt als Spur die Gerade KL, für den Achsbolzen 26 ergibt sich als Spur einer derartigen Ebene die Gerade MN.

Fig. 10 zeigt weiters einen sichtbaren Schaftabschnitt der Schwenkwelle 13 um die der Radträger 11 verdrehbar gelagert ist. Die beiden winkelig nach oben abstehenden Achsbolzen 25 und 26 befinden sich bei exakter Geradeausfahrt genau auf einer quer zur Fahrtrichtung verlaufenden Ebene, wobei die Ebene senkrecht auf die Längsachse EF und normal auf die Aufstandsfläche 16 steht und die vertikale Achse CD enthält bzw. eine parallel Ebene darstellt, welche in Fahrtrichtung gesehen, aus konstruktiven Erfordernissen weiter vorne oder weiter hinten liegen kann. Die Schwenkwelle 13 und die Schwenkachse AB liegen bei Geradeausfahrt in der Längsmittelebene des Rollers, in der auch die Geraden CD und EF liegen.

Beide Radebenen NM und KL verlaufen parallel zur Längsachse EF des Rollers. Die Schnittgerade der Radebenen verläuft parallel zur Längsachse EF des Rollers. Die Längsachse EF verläuft in der vertikalen Längsmittelebene des Rollers parallel zur Aufstandsebene bzw. zum Boden 16.

Es ist fahrtechnisch in Bezug auf Kurvenstabilität von besonderem Vorteil, wenn die vordere Radeinheit 7 von zwei in einem Winkel zueinander stehenden Rädern 12a, 12b gebildet ist, wobei die beiden Achsbolzen 25 und 26 dieser Räder 12a, 12b vom Träger 11 getragen werden, wie in Fig. 10 dargestellt ist.

Der in Fig. 9 dargestellte Radabstand 16a/16c der auf der Aufstandsebene 16 stehenden Räder 12 und 8 und die Neigung der Schwenkachse A, B zur aufstandsflächenparallelen Längsachse E, F des Rollers beeinflussen die Auswirkungen einer seitlichen Verkippung der Lenksäule 30'/31 bzw. eines das Trittbrett 1 verkippenden seitlichen Druckes in Hinblick auf das Ausmaß des Verschwenkens des Trägers 11 um die Schwenkwelle 13. Wenn der Winkel α kleiner gewählt wird, vergrößert sich der Rollradius in Bezug auf die Kippgröße um die Längsachse E, F und wenn der Winkel α größer wird, verkleinert sich der Rollradius im Verhältnis zu einer Kippbewegung um die Längsachse E, F. Die Fahrstabilität des Rollers verbessert sich auch dann, wenn sich die am Trittbrett 1 verlaufende Oberfläche bzw. Trittfläche unterhalb der die vordere und hintere Radachsen verbindenden Längsachse EF befindet.

Die Lenkung des Rollers basiert im Wesentlichen darauf, dass die vordere und hintere Radeinheit 7, 8 entlang der Längsmittel- bzw. Symmetrieebene des Rollers insbesondere mittig und fluchtend und/oder symmetrisch dazu angeordnet sind, und dass durch ein seitliches Verkippen der Trittfläche 1 bzw. der Lenksäule 30 bezüglich der Längsachse E, F auch die Schwenkwelle 13 aus der mittigen, senkrechten Position in eine dem Verkippen entsprechende entgegengesetzte Richtung verkippt wird. Wird beispielsweise die Lenksäule 30 bezüglich der Längsachse E, F nach rechts gekippt, so bewegt sich der Punkt 28 auf der Schwenkwelle 13 nach links. Des Weiteren wird dabei durch den resultierenden Hebel zwischen dem einerseits im System angreifenden Druckpunkt und dem Auflagepunkt des Rades 12 auf der Aufstandsebene 16 die Radeinheit 7 gleichsinnig der Kippbewegung der Lenksäule 30 bzw. des Trittbretts 1 nach rechts verdreht. Diese Verdrehung erfolgt analog umso stärker, je größer bautechnisch der Winkel α gewählt worden ist. Die Auslenkung der Radeinheit 7 infolge eines Kippens der Lenksäule 30 oder der Trittfläche 1 erfolgt dann in ausreichender Form, wenn, wie in Fig. 10 dargestellt ist, der Abstand zwischen den beiden Rädern 12a und 12b so groß ist, dass die erforderliche Kraft für das Auslenken bzw. Verdrehen der Radeinheit 7 aufgebaut werden kann.

Es ist vorgesehen, dass die beiden Räder 12a, 12b der Radeinheit 7, 8 in Einbaulage mit ihren oberen Randbereichen einander näher liegen, sodass die von den Radachsen über die Räder übertragenen Kräfte schräg nach außen gegen die Aufstandsebene geleitet werden und/oder dass die Radachsenbolzen der Räder 12a, 12b der Radeinheit 7 in Einbaulage näher an der vertikalen Längsmittelebene des Rollers liegen als die Auflagepunkte 16a, 17a der Räder 12a, 12b am befahrenen Boden bzw. auf der Aufstandsebene 16 und/oder dass die zur Radbefestigung vorgesehenen Radverschraubungen der als Achsbolzen ausgebildeten Radachsen 25, 26 der Radeinheit 7 die Auflagepunkte 16a, 17a der Räder 12a, 12b auch bei dem kleinsten bautechnisch fahrbaren Kurvenradius nicht überragen.

Bei Vergrößerung des Winkels α steigt die Lenkkraft wie auch die Tendenz zu einer Labilisierung der Steuerung und infolgedessen ist der Abstand der Aufstandspunkte 16a, 17a zwischen den beiden Rädern 12a, 12b entsprechend größer zu wählen. Die erforderliche Weite dieses Radabstandes hängt auch von den konstruktiv vorgesehenen Fliehkräften für die kleinsten zu fahrenden Kurvenradien bei den dafür höchstzulässigen Geschwindigkeiten ab.

Beim Fahren steht der Fahrer des Rollers mit einem Bein auf der Trittfläche 1 des Rollers und hält mit einer Hand das Griffstück 6 der Lenksäule 30 und fährt im ausbalancierten Zustand geradeaus. Eine Kurve kann eingeleitet werden, indem die Lenksäule 30 nach einer Seite verschwenkt wird, ohne dass dazu eine Veränderung des Schwerpunktes erforderlich ist. Eine Kurvenfahrt wird durch ein Verschwenken der Trittfläche 1 bzw. der Rahmenteile 2, 3 um die Längsachse E, F und das dadurch zwingend erfolgende Auslenken der vorderen Radeinheit 7 und allenfalls auch einer hinteren Radeinheit 8 um die jeweilige Schwenkachse A, B erreicht. Erst wenn der Scooter in einen entsprechenden Rollradius einlenkt, nimmt der Fahrer entsprechend proportional zur Winkelgeschwindigkeit eine Schräglage ein, die zum Kurvenmittelpunkt zeigt.

Es ist ferner vorgesehen, dass die vom Träger 11 abgehenden Radachsen 25, 26 bei Geradeausfahrt des Rollers in einer Ebene liegen die die Achse CD enthält und senkrecht zur Längsmittelebene CD-EF steht, und die Radachsen 25, 26 und die Auflagepunkte 16a, 17a der Räder 12a, 12b in dieser senkrecht zur Längsmittelebene stehenden vertikal verlaufenden Querebene liegen. Zweckmäßigerweise ist vorgesehen, dass die Radachsen 25, 26, 50 der vor und/oder hinter dem Trittbrett 1 liegenden Radeinheiten 7, 8 auf gleichem Niveau oder vorzugsweise oberhalb des Niveaus des Trittbrettes liegen. Zur Begrenzung des Drehwinkels kann vorgesehen sein, dass der Träger 11 über einen mit diesem fest verbundenen Schwenkbolzen 13 verfügt und/oder dass der Träger 11 auf einer vom Rahmenteil 3 abgehenden, vorzugsweise mit diesem fest verbundenen, Schwenkwelle 13 verdrehbar, vorzugsweise um einen mit einem Anschlag begrenzten Winkelbereich, verdrehbar gelagert ist.

Um die Schwenkachse AB verdreht sich der Träger 11 und/oder die Schwenkwelle 13, je nachdem wie diese Teile gelagert sind. Um die Schwenkachse AB sind auch die beiden Radachsen 25, 26 verdrehbar sowie die von diesen getragenen Räder 12a, 12b. Um die Schwenkachse AB ist auch eine einzige Radachse 25 verschwenkbar, die eine Radeinheit, das heißt zwei Räder oder eine Walze, trägt.

Fig. 11 und 12 zeigen eine besonders vorteilhafte Ausführungsform eines erfindungsgemäßen Rollers. Auf dem nach vorne und unten geneigten Rahmenteil 3 ist eine Schwenkwelle 13 befestigt, insbesondere angeschweißt oder angeschraubt. Der Rahmenteil 3 ist über einem Rahmenteil 2, insbesondere verschwenkbar und festlegbar, mit dem Trittbrett 1 verbunden und trägt eine Lenkstange 31 mit einem Handgriff 6. Die Schwenkwelle 13 ist nach unten hinten, in Richtung auf das Trittbrett 1 zu, im Winkel α ausgerichtet und trägt eine Radeinheit 7. Die Radeinheit 7 umfasst zwei zueinander geneigte Räder 12a, 12b, wie diese aus Fig. 12 ersichtlich sind. Im Endbereich der Schwenkwelle 13 ist ein Träger 11 verdrehbar auf der Schwenkwelle 13 gelagert, der die beiden Radachsen 25 trägt, die vom Träger 11 nach außen abgehen.

Wie aus Fig. 12 ersichtlich ist, schließen die Radebenen, deren Spuren mit MN bzw. LK bezeichnet sind, miteinander einen Winkel von 2W ein. Es ist dabei vorgesehen, dass 10° ≤ W ≤ 30°, vorzugsweise 15° ≤ W ≤ 25°, ist. Insbesondere ist es vorteilhaft, wenn 17° ≤ W ≤ 23° ist. Der Scheitel des Winkels W liegt im Punkt X.

Der Winkel W wird somit zwischen einer in Längsrichtung EF des Rollers verlaufenden Vertikalmittelebene und der jeweiligen Radebene MN bzw. KL gebildet. Die Spur der längsverlaufenden Vertikalebene ist mit CD bezeichnet.

Des Weiteren wird durch die Radachsen 25 am Träger 11 ein Punkt 02 definiert, nämlich dort, wo die Radachse 25 die Vertikalmittelebene CD durchdringt. Dieser Punkt 02 liegt auch auf der Achse AB der Schwenkwelle 13. Der Winkel V einer Geraden durch den Punkt 02 und den jeweiligen Aufstandspunkt der Radebene 16a bzw. 17a auf der Aufstandsfläche 16 und der Vertikalmittelebene ist mit V bezeichnet und beträgt 30° ≤ V ≤ 50°, vorzugsweise 35° ≤ V ≤ 45°. Diese Winkel V, W sind auch für eine Ausführungsform des Rollers, so wie dieser in den Fig. 9 und 10 dargestellt ist, von Vorteil. Der Winkel W und der Winkel V werden jeweils in der Vertikalmittelebene gemessen, welche die Aufstandspunkte 16a, 17a, den Punkt 02, den Punkt X sowie die Radachse 25 enthält. Von Vorteil ist es, wenn der Träger 11 auf der Schwenkwelle 3 mit einer auf das mit einem Gewinde versehenen Ende der Schwenkwelle 3 aufgeschraubten Mutter 51 verschwenkbar festgelegt wird. Zwischen dem Träger 11 und der Mutter 51 kann eine Kunststoffschreibe 50 eingesetzt sein und durch Anziehen oder Lockern der Mutter 51 kann die Leichtgängigkeit der Verschwenkung des Trägers 11 auf der Schwenkwelle eingestellt bzw. verändert werden.

Durch diese beiden Winkel W und V wird die Geometrie der Radanordnung bestimmt bzw. der Abstand der beiden Räder und deren Neigungswinkel zur Vertikalebene CD vorgegeben. Je nach Radabstand, Raddurchmesser und Radneigung variieren diese Winkel. Es zeigte sich jedoch, dass bei Einhaltung dieser optimierten Winkel auch ein optimales Fahrverhalten bei minimaler Sturzgefahr gegeben ist.

Bemerkt wird noch, dass die Radebenen MN, KL parallel zur Längsachse EF des Rollers verlaufen und die durch den Punkt X verlaufende Schnittgerade dieser beiden Ebene ebenfalls parallel zur Längsachse EF verläuft, die wiederum parallel zur Aufstandsfläche 16 des Rollers ausgerichtet ist. Dies bedeutet, dass die bezüglich der Fahrtrichtung vordersten und hintersten Punkte der Räder 12a und 12b gleichen Abstand besitzen.

In einer weiteren bevorzugten Ausführungsform ist ein motor- getriebener Scooter vorgesehen, wobei insbesondere in Rahmenabschnitten 1,2,3 Akkumulatoren vorgesehen sind, welche einen E-Motor, vorzugsweise in der Form eines Radnabenmotors mit elektrischer Energie versorgen, wobei sich die Leistungssteuerung für den Antrieb zweckmäßigerweise im Bereich des Griffstückes 6 befindet.

## Patentansprüche

1. Roller mit einer Lenksäule (30, 31) und mit einem ein Trittbrett (1) umfassenden Rahmen (2, 3) und zwei in Längsrichtung des Rollers in einem Abstand voneinander liegenden, den Rahmen (1, 2, 3) über Radachsen (25, 26, 50) abstützenden Radeinheiten (7, 8), wobei der Rahmen (1, 2, 3) einen in Bezug auf das Trittbrett (1) nach vorne abgehenden, vorzugsweise in der vertikalen Längsmittelebene des Rollers liegenden, Rahmenteil (2) aufweist, von dem zumindest eine in der Längsmittelebene des Rollers liegende Schwenkwelle (13) getragen ist, die unter einem vorgegebenen Winkel (α) zur Aufstandsebene (16) des Rollers vom Rahmenteil (2) abgeht, eine Schwenkachse (A, B) für eine lenkbare vordere, zwei Räder (12a, 12b) aufweisende Radeinheit (7) definiert, wobei die vordere Radeinheit (7) um die Schwenkachse (A, B) verdrehbar angeordnet ist, sodass bei seitlichem Verkippen der Lenksäule (30, 31) und/oder des Trittbrettes (1) ein Verschwenken der vorderen Radeinheit (7) in Bezug auf die Längsmittelebene erfolgt, **dadurch gekennzeichnet, dass** die von zwei Radachsen (25, 26) getragenen Räder (12a, 12b) der vorderen Radeinheit (7) bzw. die Radebenen dieser Räder (12a, 12b) zueinander in einem Winkel (2W) von 20° bis 60°, vorzugsweise 30° bis 50°, insbesondere 34° bis 46°, geneigt verlaufen und die bodenfernen Radbereiche einander näher liegen als die bodennahen Radbereiche.

2. Roller nach Anspruch 1, **dadurch gekennzeichnet, dass** jede der beiden Radachse(n) (25, 26) der vorderen Raheinheit in einem vorgegebenen Abstand (A) von der Schwenkachse (A, B) angeordnet ist und vorzugsweise in einer senkrecht zu der von der Schwenkwelle (13) definierten Schwenkachse (A, B) verlaufenden Ebene um die Schwenkwelle (13) verschwenkbar ist.

3. Roller nach Anspruch 1 oder 2, **dadurch gekennzeichnet, dass** auf der Schwenkwelle (13) ein in der senkrecht verlaufenden Ebene um die Schwenkachse (A, B) verschwenkbarer Träger (11) gelagert oder gelegen ist, der die beiden Radachsen (25, 26) der vorderen Radeinheit (7) trägt oder dass die beiden Radachsen (25, 26) der vorderen Radeinheit (7) in der senkrecht verlaufenden Ebene um die Schwenkachse (A, B) verdrehbar auf der Schwenkwelle (13) gelagert sind.

4. Roller nach einem der Ansprüche 1 bis 3, **dadurch gekennzeichnet, dass** der Rahmen (1, 2, 3) in seinem vorderen Endbereich einen Rahmenteil (3) aufweist, der nach unten geneigt und vom Trittbrett (1) weg gerichtet verläuft und von dem Rahmenteil (3) die die Schwenkachse (A, B) definierende Schwenkwelle (13) nach unten in Richtung Trittbrett (1) abgeht, wobei gegebenenfalls die Schwenkachse (A, B) und der Rahmenteil (3) einen Winkel von 90° einschließen und/oder dass die Schwenkwelle vom Rahmenteil (2) nach vorne oben entlang der Schwenkachse AB zur Aufnahme des Trägers (11) absteht..

5. Roller nach Anspruch 3 oder 4, **dadurch gekennzeichnet, dass** die Radachsen (25, 26) der vorderen Radeinheit (7) zwischen den zwei auf den Radachsen (25, 26) in einem vorgegebenen Abstand gelegenen Rädern (12) der Radeinheit (7) am Träger (11) gelagert sind.

6. Roller nach einem der Ansprüche 1 bis 5, **dadurch gekennzeichnet, dass** die Lenksäule (30, 31) an dem das Trittbrett (1) umfassenden Rahmen (1, 2, 3) gegebenenfalls schwenkbar und arretierbar, befestigt ist und im Bezug auf das Trittbrett (1) nach oben abgeht und/oder dass die Lenksäule (30, 31), insbesondere deren oberes Ende einen Haltegriff aufweist, der vorzugsweise in Fahrtrichtung nach vorne geneigt ist und/oder dass von der Lenksäule (30, 31) und/oder einer daran befestigten Lenker- oder Griffstange (6) zumindest eine Bremsvorrichtung für zumindest eine Radeinheit (7, 8) getragen ist.

7. Roller nach einem der Ansprüche 3 bis 6, **dadurch gekennzeichnet, dass** der Träger (11) einen stab- oder rohrförmig ausgebildeten Endteil aufweist oder eine Lagerhülse (9) ausbildet und mit dem Endteil oder der Lagerhülse auf der Schwenkwelle (13) gelagert und/oder auf die Schwenkwelle (13) aufgesteckt oder in diese eingesteckt ist und/oder dass die Schwenkwelle (13) stabförmig ausgebildet ist oder einen stabförmigen Endbereich umfasst und von einem Drehlager oder einer Drehhülse (4) im Rahmenteil (3) aufgenommen ist und/oder dass die Radachsen (25, 26) vom Träger (11) im Abstand von der Schwenkwelle (13) gehalten sind.

8. Roller nach einem der Ansprüche 4 bis 7, **dadurch gekennzeichnet, dass** die Schwenkwelle (13) vom Rahmenteil (3) nach hinten in Richtung Trittbrett (1) abgeht und einen Winkel (α) mit Aufstandsebene (16) einschließt, dessen Scheitel in Richtung Trittbrett (1) weist.

9. Roller nach einem der Ansprüche 1 bis 8, **dadurch gekennzeichnet, dass** der Schwenkwinkel der vorderen Radeinheit (7,) und/oder des Trägers (11) um die jeweilige Schwenkachse (A, B) und/oder bezüglich einer vertikalen Achse oder der Achse der Lenksäule (30) von einer Begrenzungseinheit, z.B. einem Anschlag, begrenzt ist.

10. Roller nach einem der Ansprüche 1 bis 9, **dadurch gekennzeichnet, dass** die die vordere Radeinheit (17) abstützenden Radachsen (25, 26) von einem auf der Schwenkwelle (13) verschwenkbar gelagerten Träger (11) abgehen und jeweils ein Rad (12a, 12b) tragen und/oder dass der Träger (11) auf der Schwenkwelle (13) um die von der Schwenkwelle (13) definierte Schwenkachse (A, B) verschwenkbar gelagert oder gelegen ist und die Radachsen (25, 26) der vorderen Radeinheit (7) trägt und/oder dass die Schwenkwelle (13) vom Rahmen (1, 2, 3) nach oben abgeht und am Rahmen (1, 2, 3) oder Rahmenteil (2, 3) befestigt oder verdrehbar gelagert ist und auf ihrem dem Trittbrett (1) fernen Bereich der Träger (11) gelagert oder ausgebildet oder befestigt ist oder dass die Schwenkwelle (13) vom Rahmen (1, 2, 3) nach unten abgeht und am Rahmen oder Rahmenteil (3) verdrehbar gelagert oder festgelegt ist und auf ihrem dem Trittbrett (1) nahen Bereich der Träger (11) gelagert oder ausgebildet oder befestigt ist.

11. Roller nach einem der Ansprüche 3 bis 10, **dadurch gekennzeichnet, dass** die Radachsen (25, 26) der vorderen Radeinheit (7) in einer Vertikalebene liegen, die senkrecht zur Längsrichtung (EF) des Rollers steht und/oder dass die Achsen (OP/QR) der Radachse(n) (25, 26) der vorderen Radeinheit (7) mit der Aufstandsebene (16) einen Winkel (W) von 10° bis 35°, vorzugsweise 15° bis 25°, insbesondere 17° bis 23°, einschließen, wobei gegebenenfalls die Auflagepunkte (16a, 17a) der Räder (12a, 12b) in der Vertikalebene liegen, die durch die quer zur Fahrtrichtung verlaufende Achse des Trägers (11) und/oder die Radachsen (25, 26) der vorderen Radeinheit (7) verläuft und/oder dass die vom Träger (11) abgehenden Radachsen (25, 26) der vorderen Radeinheit (7) bei Geradeausfahrt des Rollers in einer Ebene liegen, die die Achse CD enthält und senkrecht zur Längsmittelebene (CD-EF) steht, wobei die Radachsen (25, 26) der vorderen Radeinheit (7) und die Auflagepunkte (16a, 17a) der Räder (12a, 12b) in dieser senkrecht zur Längsmittelebene stehenden vertikal verlaufenden Querebene liegen.

12. Roller nach einem der Ansprüche 3 bis 11, **dadurch gekennzeichnet, dass** der Winkel der jeweiligen Schwenkachse (A, B) und/oder der Schwenkwelle (13) der vorderen Radeinheit (7) zur Aufstandsebene (16) zwischen 10° und 90°, vorzugsweise zwischen 25 und 85°, insbesondere zwischen 40 und 80°, liegt.

13. Roller nach einem der Ansprüche 3 bis 12, **dadurch gekennzeichnet, dass** der die beiden Radachsen (25,26) tragende Träger (11) mit den seitlich abgehenden und in einer quer zur Längsmittelebene (CD, EF) verlaufenden Ebene (mit Spur CD) abstehenden Radachsen (25, 26) der vorderen Radeinheit (7) über eine im Winkel (α) geneigte, entsprechend der Geraden AB verlaufende Bohrung oder einen Achsbolzen verfügt, wobei der Winkel (α) zwischen der Längsachse EF und der Geraden AB zwischen 10° und 90°, vorzugsweise zwischen 30° und 80°, insbesondere zwischen 40° und 70°, liegt.

14. Roller nach einem der Ansprüche 11 bis 13, **dadurch gekennzeichnet, dass** die vordere Radeinheit (7) zwei in der Form des Großbuchstabens A geneigte, im oberen Bereich näher liegenden Radumfänge aufweisende Räder (12a, 12b) besitzt, die auf den Radachsen (25, 26) drehbar gelagert sind und/oder dass die beiden Räder (12a, 12b) der vorderen Radeinheit (7) in Einbaulage mit ihren oberen Randbereichen einander näher liegen, sodass die von den Radachsen (25, 26) über die Räder (12a, 12b) übertragenen Kräfte schräg nach außen gegen die Aufstandsebene geleitet werden und/oder dass die Radachsen (25, 26) der Räder (12a, 12b) der vorderen Radeinheit (7) in Einbaulage näher an der vertikalen Längsmittelebene des Rollers liegen als die Auflagepunkte (16a, 17a) dieser Räder (12a, 12b) am befahrenen Boden bzw. auf der Aufstandsebene (16).

15. Roller nach einem der Ansprüche 11 bis 14, **dadurch gekennzeichnet, dass** der Scheitel X des spitzen Winkels W in der Schnittgeraden der Ebenen, die parallel zur Fahrtrichtung bzw. zur Längsrichtung EF des Rollers bzw. parallel zur Aufstandsebene (16) verlaufen, liegt und/oder dass die Geometrie der Radstellung konstruktiv durch einen Vektor definiert ist, der durch die Gerade (L, O) abgebildet wird, welche in einem Auflagepunkt (16a, 17a) jedes der Räder (12a, 12b) der vorderen Radeinheit (7) beginnt, und in dem Schnittpunkt (O) der beiden Radachsen (25,26) endet, und zwischen den Aufstandspunkten (16a, 17a) mit der Vertikalmittelebene CD jeweils einen Winkel V von 30° < V < 50°, vorzugsweise 35° < V < 45° einschließt.

## Claims

1. Scooter with a steering column (30, 31) and with frames (2, 3) comprising a footboard (1) and two wheel units (7, 8) supported by the frames (1, 2, 3) axles (25, 26, 50) at a distance from one another in the longitudinal direction of the scooter, wherein the frames (1, 2, 3) have a frame part (2) projecting forwards with respect to the footboard (1) and preferably lying in the vertical longitudinal centre plane of the scooter, and which supports at least a pivot shaft (13) lying in the longitudinal centre plane of the scooter and extending from the frame part (2) at a predetermined angle (α) with respect to the support plane (16) of the scooter, a pivot axis (A, B) for a steerable front wheel unit (7) with two wheels (12a, 12b), wherein the front wheel unit (7) is rotatable about the pivot axis (A, B), so that on lateral inclination of the steering column (30, 31) and/or of the foot board (1), there is a pivoting of the front wheel unit (7) with respect to the longitudinal centre plane, **characterised in that** the two wheels (12a, 12b) of the front wheel unit (7) supported by the wheel axles (25, 26) and the wheel planes of these wheels (12a, 12b) are inclined with respect to one another at an angle (2W) of 20° to 60°, preferably 30° to 50°, in particular 34° to 46°, while the wheel areas furthest from the ground lie closer to one another than the wheel areas nearest the ground.

2. Scooter according to claim 1, **characterised in that** each of the two wheel axles (25, 26) of the front wheel unit is arranged at a predetermined distance (A) from the pivot axis (A, B), and is preferably pivotable about the pivot shaft (13) in a direction perpendicular to the plane extending from the pivot axis (A, B) defined by the pivot shaft (13).

3. Scooter according to claim 1 or 2, **characterised in that** a pivotable support (11) is mounted or located on the pivot shaft (13) in the plane perpendicular to the pivot axis (A, B), and supports the two wheel axles (25, 26) of the front wheel unit (7), or that the two wheel axles (25, 26) of the front wheel unit (7) are mounted to rotate on the pivot shaft (13) in the plane perpendicular to the pivot axis (A, B).

4. Scooter according to one of the claims 1 to 3, **characterised in that** the frame (1, 2, 3) has a frame part (3) in its front end region, which is inclined downwards and is oriented away from the footboard (1) and from the frame part (3), wherein the pivot axis (A, B) of the pivot shaft (13) extends downwards towards the footboard (1), wherein, if necessary, the pivot axis (A, B) and the frame part (3) form an angle of 90° and/or that the pivot shaft protrudes forwards and upwards from the frame part (2) along the pivot axis AB to receive the support (11).

5. Scooter according to claim 3 or 4, **characterised in that** the wheel axles (25, 26) of the front wheel unit (7) are mounted on the support (11) between the two wheels (12) of the wheel unit (7) and located at a predetermined distance from one another on the wheel axles (25, 26).

6. Scooter according to one of the claims 1 to 5, **characterised in that,** if necessary, the steering column (30, 31) on the frame (1, 2, 3) comprising the footboard (1) is mounted to be pivotable and lockable and extends upwards with respect to the footboard (1), and/or that the steering column (30, 31), in particular its upper end, has a handle that is preferably inclined in the direction of forward travel, and/or that the steering column (30, 31) and/or an attached steering or handlebar (6), carries at least a braking device for at least one wheel unit (7, 8).

7. Scooter according to one of the claims 3 to 6, **characterised in that** the support (11) has a bar-shaped or tubular end part or forms a bearing bush (9) and is mounted on the pivot shaft (13) with the end part or the bearing bush, and/or attached to the pivot shaft (13) or inserted into it and/or that the pivot shaft (13) is rod-shaped or comprises a rod-shaped end part that is housed in a pivot bearing or a pivot bush (4) in the frame part (3) and/or that the wheel axles (25, 26) are held at a distance from the pivot shaft (13) by the support (11).

8. Scooter according to one of the claims 4 to 7, **characterised in that** the pivot shaft (13) extends backwards from the frame part (3) towards the footboard (1) and forms an angle (α) with the support plane (16) with its apex in the direction of the footboard (1).

9. Scooter according to one of the claims 1 to 8, **characterised in that** the pivot angle of the front wheel unit (7) and/or of the support (11) about the respective pivot axis (A, B) and/or with respect to a vertical axis, or the axis of the steering column (30), is limited by a limiting unit, e.g. a stop.

10. Scooter according to one of the claims 1 to 9, **characterised in that** the wheel axles (25, 26) supported by the front wheel unit (17) extend from a pivotably-mounted support (11) to the pivot shaft (13) and respectively support a wheel (12a, 12b) and/or that the support (11) is mounted or located on the pivot shaft (13) to be pivotable about the pivot axis (A, B) as defined by the pivot shaft (13), and supports the wheel axles (25, 26) of the front wheel unit (7) and/or that the pivot shaft (13) extends upwards from the frame (1,2,3) and is fixed or pivotably-mounted on the frame (1, 2, 3) or frame part (2, 3) and is supported or integrated or attached to the region of the support (11) furthest from the footboard (1) or that the pivot shaft (13) extends downwards from the frame (1, 2, 3) and is pivotably-mounted or fixed to the frame or frame part (3), and is supported or integrated or attached to the region of the support (11) nearest the footboard (1).

11. Scooter according to one of the claims 3 to 10, **characterised in that** the wheel axles (25, 26) of the front wheel unit (7) lie in a vertical plane perpendicular to the longitudinal direction (EF) of the scooter and/or **in that** the axes (OP/TD) of the wheel axles (25, 26) of the front wheel unit (7) form an angle (W) with respect to the support plane (16) of 10° to 35°, preferably 15° to 25°, in particular 17° to 23°, wherein, where appropriate, the support points (16a, 17a) of the wheels (12a, 12b) lie in the vertical plane which extends laterally to the direction of the axis of the support (11) in the direction of travel and/or the wheel axles (25, 26) of the front wheel unit (7) and/or that during straight travel of the scooter, the wheel axles (25, 26) of the front wheel unit (7) extending from the support (11), lie in a plane containing the axis CD and perpendicular to the longitudinal centre plane (CD-EF), wherein the wheel axles (25, 26) of the front wheel unit (7) and the bearing points (16a, 17a) of the wheels (12a, 12b) lie in this vertically running lateral plane perpendicular to the longitudinal centre plane.

12. Scooter according to one of the claims 3 to 11, **characterised in that** the angle of the respective pivot axis (A, B) and/or the pivot shaft (13) of the front wheel unit (7) with respect to the support plane (16) lies between 10° and 90°, preferably between 25° and 85°, in particular between 40° and 80°.

13. Scooter according to one of the claims 3 to 12, **characterised in that** the support (11) supporting the two wheel axles (25,26), with the protruding wheel axles (25, 26) of the front wheel unit (7) extending laterally outwards to the longitudinal plane (CD, EF) (with path CD) and inclined at an angle (α) via a bore or an axle bolt corresponding to the line AB, wherein the angle (α) between the longitudinal axis EF and the line AB lies between 10° and 90°, preferably between 30° and 80°, in particular between 40° and 70°.

14. Scooter according to one of the claims 11 to 13, **characterised in that** the front wheel unit (7) has two wheels (12a, 12b) inclined in the form of a capital letter A with the upper wheel circumference areas lying closer to one another and pivotably mounted on the wheel axles (25, 26) and/or that, in the installed position, the two wheels (12a, 12b) of the front wheel unit (7) are closer to one another in their upper edge areas, so that forces transmitted from the axles (25, 26) via the wheels (12a, 12b) are directed obliquely outwards towards the support plane and/or that, in the installation position, the axles (25, 26) of the wheels (12a, 12b) of the front wheel unit (7) are closer to the vertical longitudinal centre plane of the scooter than the support points (16a, 17a) of these wheels (12a, 12b) to the ground being travelled or to the support plane (16).

15. Scooter according to one of the claims 11 to 14, **characterised in that** the apex X of the acute angle W in the intersection line of the planes extends parallel to the direction of travel or to the longitudinal direction EF of the scooter or parallel to the support plane (16), and/or **in that** the geometry of the wheel position is structurally defined by a vector, which is defined by the straight line (L, 0), which begins at a support points (16a, 17a) of each of the wheels (12a, 12b) of the front wheel unit (7), and ends at the intersection point (O) of the two wheel axles (25, 26), and forms an angle V between the support points (16a, 17a) with respect to the vertical centre plane CD respectively of 30° < V < 50°, preferably 35 ° < V < 45°.

## Revendications

1. Roller avec une colonne de direction (30, 31) et avec un châssis (2, 3) comprenant un marchepied (1) et deux unités de roues (7, 8) disposées dans la direction longitudinale du roller à une certaine distance entre elles, soutenant le châssis (1, 2, 3) par l'intermédiaire d'essieux (25, 26, 50), le châssis (1, 2, 3) comprenant une partie de châssis (2) s'éloignant vers l'avant par rapport au marchepied (1), se trouvant de préférence dans le plan central longitudinal vertical du roller, qui supporte au moins un arbre pivotant (13) se trouvant dans le plan central longitudinal du roller, qui s'éloigne de la partie de châssis (2) en formant un angle (α) prédéterminé par rapport au plan d'appui (16) du roller, qui définit un axe pivotant (A, B) pour une unité de roue avant directrice (7) comprenant deux roues (12a, 12b), l'unité de roue avant (7) étant disposée de manière rotative autour de l'axe pivotant (A, B), de façon à ce que, lors d'un basculement latéral de la colonne de direction (30, 31) et/ou du marchepied (1), a lieu un pivotement de l'unité de roue avant (7) par rapport au plan central longitudinal, **caractérisé en ce que** les roues (12a, 12b) de l'unité de roue avant (7) supportée par deux essieux (25, 26) ou les plans de ces roues (12a, 12b) sont inclinés entre eux avec un angle (2W) de 20° à 60°, de préférence de 30° à 50°, plus particulièrement de 34° à 46° et les zones des roues éloignées du sol sont plus proches entre elles que les zones des roues proches du sol.

2. Roller selon la revendication 1, **caractérisé en ce que** chacun des deux essieux (25, 26) de l'unité de roue avant est disposé à une distance (A) prédéterminée par rapport à l'axe pivotant (A, B) et peut être pivoté, de préférence, autour de l'arbre de pivotement (13) dans un plan s'étendant perpendiculairement par rapport à l'axe de pivotement (A, B) défini par l'arbre de pivotement (13).

3. Roller selon la revendication 1 ou 2, **caractérisé en ce que**, sur l'arbre de pivotement (13), est logé ou posé un support (11) pivotant dans le plan perpendiculaire autour de l'axe de pivotement (A, B), qui supporte les deux essieux (25, 26) de l'unité de roue avant (7) ou **en ce que** les deux essieux (25, 26) de l'unité de roue avant (7) sont logés sur l'arbre de pivotement (13) de manière rotative dans le plan perpendiculaire autour de l'axe de pivotement (A, B).

4. Roller selon l'une des revendications 1 à 3, **caractérisé en ce que** le châssis (1, 2, 3) comprend, au niveau de sa zone d'extrémité avant, une partie de châssis (3) qui est inclinée vers le bas et orientée du côté opposé au marchepied (1) et l'arbre de pivotement (13) définissant l'axe de pivotement (A, B) s'éloigne de la partie de châssis (3) vers le bas en direction du marchepied (1), l'axe de pivotement (A, B) et la partie de châssis (3) formant, le cas échéant, un angle de 90° et/ou **en ce que** l'arbre de pivotement dépasse de la partie de châssis (2) vers l'avant en haut le long de l'axe de pivotement AB pour le logement du support (11).

5. Roller selon la revendication 3 ou 4, **caractérisé en ce que** les essieux (25, 26) de l'unité de roue avant (7) sont logés sur le support (11) entre les deux roues (12) de l'unité de roue (7) disposées à une distance prédéterminée sur les essieux (25, 26).

6. Roller selon l'une des revendications 1 à 5, **caractérisé en ce que** la colonne de direction (30, 31), est fixée, et peut, le cas échéant être pivotée et bloquée au châssis (1, 2, 3) comprenant le marchepied (1) et dépasse vers le haut par rapport au marchepied (1) et/ou **en ce que** la colonne de direction (30, 31), plus particulièrement son extrémité supérieure, comprend une poignée de maintien qui est inclinée de préférence dans la direction de marche vers l'avant et/ou **en ce que** la colonne de direction (30, 31) et/ou une tige de direction ou de préhension (6), qui y est(sont) fixée(s), supporte au moins un dispositif de freinage pour au moins une unité de roue (7, 8).

7. Roller selon l'une des revendications 3 à 6, **caractérisé en ce que** le support (11) comprend une partie d'extrémité en forme de tige ou de forme tubulaire ou constitue une douille de palier (9) et est logé, avec la partie d'extrémité ou la douille de palier, sur l'arbre de pivotement (13) et/ou est enfiché sur l'arbre de pivotement (13) ou inséré dans celui-ci et/ou **en ce que** l'arbre de pivotement (13) présente une forme de tige ou comprend une zone d'extrémité en forme de tige et est logé par un palier rotatif ou une douille rotative (4) dans la partie de châssis (3) et/ou **en ce que** les essieux (25, 26) sont maintenus par le support (11) à une certaine distance de l'arbre de pivotement (13).

8. Roller selon l'une des revendications 4 à 7, **caractérisé en ce que** l'arbre de pivotement (13) dépasse de la partie de châssis (3) vers l'arrière en direction du marchepied (1) et forme un angle (α) avec le plan d'appui (16), dont le sommet pointe dans la direction du marchepied (1).

9. Roller selon l'une des revendications 1 à 8, **caractérisé en ce que** l'angle de pivotement de l'unité de roue avant (7) et/ou du support (11) autour de l'axe de pivotement (A, B) correspondant et/ou par rapport à un axe vertical ou à l'axe de la colonne de direction (30), est limité par une unité de limitation, par exemple une butée.

10. Roller selon l'une des revendications 1 à 9, **caractérisé en ce que** les essieux (25, 26) soutenant l'unité de roue avant (17) dépassent d'un support (11) logé de manière pivotante sur l'arbre de pivotement (13) et supportent chacun une roue (12a, 12b) et/ou **en ce que** le support (11) est logé ou posé sur l'arbre de pivotement (13) de manière pivotante autour de l'axe de pivotement (A, B) défini par l'arbre de pivotement (13) et supporte les essieux (25, 26) de l'unité de roue avant (7) et/ou **en ce que** l'arbre de pivotement (13) dépasse du châssis (1, 2, 3) vers le haut et est fixé ou logé de manière rotative sur le châssis (1, 2, 3) ou la partie de châssis (2, 3) et le support (11) est logé ou formé ou fixé sur sa partie éloignée du marchepied (1) ou **en ce que** l'arbre de pivotement (13) dépasse du châssis (1, 2, 3) vers le bas et est logé de manière rotative ou fixé sur le châssis ou la partie de châssis (3) et le support (11) est logé ou formé ou fixé sur sa partie éloignée du marchepied (1).

11. Roller selon l'une des revendications 3 à 10, **caractérisé en ce que** les essieux (25, 26) de l'unité de roue avant (7) se trouvent dans un plan vertical, qui est perpendiculaire à la direction longitudinale (EF) du roller et/ou **en ce que** les axes (OP/QR) des essieux (25, 26) de l'unité de roue avant (7) forment, avec le plan d'appui (16), un angle (W) de 10° à 135°, de préférence de 15° à 25°, plus particulièrement de 17° à 23°, les points d'appui (16a, 17a) des roues (12a, 12b) se trouvant, le cas échéant, dans le plan vertical, qui passe par l'axe du support (11), transversal par rapport à la direction de la marche et/ou les essieux (2 5, 26) de l'unité de roue avant (7) et/ou **en ce que** les essieux (25, 26) dépassant du support (11) de l'unité de roue avant (7) se trouvent, lors d'un mouvement tout droit du roller, dans un plan contenant l'axe CD et perpendiculaire au plan central longitudinal (CD-EF), les essieux (25, 26) de l'unité de roue avant (7) et les points d'appui (16a, 17a) des roues (12a, 12b) se trouvant dans ce plan transversal s'étendant perpendiculairement au plan central longitudinal.

12. Roller selon l'une des revendications 3 à 11, **caractérisé en ce que** l'angle entre l'axe de pivotement (A, B) et/ou l'arbre de pivotement (13) de l'unité de roue avant (7) et le plan d'appui (16) se trouve entre 10° et 90°, de préférence entre 25° et 85°, plus particulièrement entre 40° et 80°.

13. Roller selon l'une des revendications 3 à 12, **caractérisé en ce que** le support (11) supportant les deux essieux (25, 26), avec les essieux (25, 26) de l'unité de roue avant (7) dépassant latéralement et dans un plan (avec piste CD) s'étendant transversalement par rapport au plan central longitudinal (CD, EF), dispose d'un alésage ou d'une tige d'axe qui forme un angle (α) avec la droite AB, l'angle (α) entre l'axe longitudinal EF et la droite AB se trouve entre 10° et 90°, de préférence entre 30° et 80°, plus particulièrement entre 40° et 70°.

14. Roller selon l'une des revendications 11 à 13, **caractérisé en ce que** l'unité de roue avant (7) comprend deux roues (12a, 12b) inclinées sous la forme de la lettre majuscule A, présentant des circonférences de roues plus proches dans la partie supérieure, qui sont logées de manière rotative sur les essieux (25, 26) et/ou en ce que les deux roues (12a, 12b) de l'unité de roue avant (7) sont, dans la position de montage, plus proches au niveau de leurs bords supérieurs, de façon à ce que les forces transmises par les essieux (25, 26) par l'intermédiaire des roues (12a, 12b) sont orientées en oblique vers l'extérieur contre le plan d'appui et/ou **en ce que** les essieux (25, 26) des roues (12a, 12b) de l'unité de roue avant (7) sont plus proches, dans la position de montage, au niveau du plan central longitudinal du roller, que les points d'appui (16a, 17a) de ces roues (12a, 12b) sur le sol parcouru ou sur le plan d'appui (16).

15. Roller selon l'une des revendications 11 à 14, **caractérisé en ce que** le sommet X de l'angle aigu W se trouve dans la droite coupant les plans qui s'étendent parallèlement à la direction de marche ou à la direction longitudinal EF du roller ou parallèlement au plan d'appui (16) et/ou **en ce que** la géométrie de la position des roues est définie par construction par un vecteur représenté par la droite (L, O), qui commence au niveau d'un point d'appui (16a, 17a) de chacune des roues (12a, 12b) de l'unité de roue avant (7), et se termine au niveau du point d'intersection (O) des deux essieux (25, 26) et forme, entre les points d'appui (16a, 17a) avec le plan central vertical CD, un angle V, 30° < V < 50°, de préférence 35° < V < 45°.
